Europäisches Patentamt

European Patent Office

Office européen des brevets

(19)

(11) **EP 1 630 672 A2**

(12) **EUROPEAN PATENT APPLICATION**

(43) Date of publication:
**01.03.2006 Bulletin 2006/09**

(51) Int Cl.:
*G06F 9/50* (2006.01)        *G06F 1/32* (2006.01)

(21) Application number: **05254459.0**

(22) Date of filing: **18.07.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **20.07.2004 JP 2004211420**

(71) Applicant: **SONY CORPORATION**
**Tokyo 141 (JP)**

(72) Inventors:
• **Isozaki, Masaaki,**
  **c/o Sony Corporation**
  **Tokyo 141 (JP)**
• **Araki, Yuichi,**
  **c/o Sony Corporation**
  **Tokyo 141 (JP)**

(74) Representative: **DeVile, Jonathan Mark et al**
**D Young & Co**
**120 Holborn**
**London EC1N 2DY (GB)**

(54) **Information processing apparatus, method and program for distributed processing on processors with variable clock-rates**

(57)    An information processing apparatus includes a first processor and a plurality of second processors. The first processor includes an application-program execution controller for controlling execution of an application program, and an operation-information obtaining unit for obtaining operation information regarding operation of the second processors. A distributed-processing controller controls distributed processing assigned to the second processors so that processing jobs relating to the execution of the application program is integrated as a processing unit that provides a single function. A clock-rate-ratio setting unit sets clock-rate ratios of current operating clock rates relative to maximum operating clock rates. The operation information includes the maximum operating clock rates, the current operating clock rates, and the numbers of cycles required in a predefined time for the processing assigned to the second processors. The distributed-processing controller controls the distributed processing corresponding to the processing unit based on the operation information.

FIG. 1

Printed by Jouve, 75001 PARIS (FR)

## Description

BACKGROUND OF THE INVENTION

1. Field of the Invention

The present invention relates to information processing apparatuses, information processing methods, and programs. Particularly, the present invention relates to an information processing apparatus, an information processing method, and a program that are suitable for cases where distributed processing is executed by a plurality of processors.

2. Description of the Related Art

Recently, interest has arisen in distributed processing, in which processing is executed in a distributed manner using a plurality of processors or computers. Distributed processing can be executed by a plurality of computers connected via a communication network, by a plurality of processors provided in a single computer, or by a combination of these approaches.

An apparatus or a processor that requests (instructs) execution of distributed processing sends data and programs for executing distributed processing to other apparatuses or processors that execute distributed processing. The apparatuses or processors that have received the data and programs for executing distributed processing execute processing requested, and send the resulting data to the apparatus or processor at the source of the request for distributed processing.

The apparatus or processor at the source of the request for distributed processing receives the data sent from other apparatuses or processors that execute distributed processing, and executes certain processing based on the data received or records the data received.

Techniques for implementing computer architectures for high-speed processing by executing distributed processing using uniform modular structures, common computing modules, and uniform software cells have been proposed. Such techniques are described, for example, in Japanese Unexamined Patent Application Publication No. 2002-342165, Japanese Unexamined Patent Application Publication No. 2002-351850, Japanese Unexamined Patent Application Publication No. 2002-358289, Japanese Unexamined Patent Application Publication No. 2002-366533, and Japanese Unexamined Patent Application Publication No. 2002-366534.

According to the documents described above, basic processing modules are processor elements (PEs). Each of the PEs includes a processing unit (PU), a direct memory access controller (DMAC), and a plurality of additional processing units (APUs), i.e., a plurality of subprocessors for a main processor.

SUMMARY OF THE INVENTION

Various aspects and features of the present invention are defined in the appended claims.

Recently, as the clock rate and component density of information processing apparatuses increase, power consumption needed for processing is considerably increasing. However, in distributed processing systems that have been available, consideration has not been paid to selection of processors to which distributed processing is assigned in order to reduce power consumption of a processor or a set of processors while executing processing requested.

It is desired that assignment of distributed processing is suitably determined, functions being executed as logical threads are maintained in normal status, and information processing is executed reliably, so that power consumption of a processor or a set of processors can be reduced while executing processing requested.

An information processing apparatus according to an embodiment of the present invention includes a first processor and a plurality of second processors. The first processor includes application-program execution controlling means for controlling execution of an application program, operation-information obtaining means for obtaining operation information regarding operation of the plurality of second processors, distributed-processing controlling means for controlling distributed processing when the execution of the application program is controlled by the application-program execution controlling means, the distributed processing assigning processing to the plurality of second processors so that a plurality of processing jobs relating to the execution of the application program is integrated as a processing unit that provides a single function and so that the function corresponding to the processing unit is provided, and clock-rate-ratio setting means for setting clock-rate ratios of current operating clock rates relative to maximum operating clock rates at which the plurality of second processors is capable of operating. The operation information includes the maximum operating clock rates, the current operating clock rates, and the numbers of cycles required in a predefined time for the processing assigned to the plurality of second processors. The distributed-processing controlling means controls the distributed processing corresponding to the processing unit based on the operation information.

The clock-rate-ratio setting means may set the clock-rate ratios so that the clock-rate ratios are a common value among all the plurality of second processors.

The clock-rate-ratio setting means may set the clock-rate ratios independently among the plurality of second processors.

The distributed-processing controlling means may calculate processor usage rates based on the current operating clock rates and the number of cycles required in the predefined time for the processing assigned to the plurality of second processors, and exercise control so that priority is given to second processors whose ratios of the processor usage rates to the clock-rate ratios are lower in assigning the distributed processing corresponding to the processing unit.

The clock-rate-ratio setting means may update the clock-rate ratios based on the processor usage rates.

An information processing method according to another embodiment of the present invention is an information processing method for an information processing apparatus including a first processor and a plurality of second processors. The information processing method includes the steps of requesting start of distributed processing in which processing is assigned to the plurality of second processors by the first processor controlling execution of an application program so that a plurality of processing jobs assigned to the plurality of second processors is integrated as a processing unit that provides a single function and so that the function corresponding to the processing unit is provided; obtaining operation information regarding operation of the plurality of second processors, the operation information including maximum operating clock rates at which the plurality of second processors is capable of operating, current operating clock rates of the plurality of second processors, and the number of cycles required in a predefined time for the processing assigned to the plurality of second processors; controlling assignment of the distributed processing corresponding to the processing unit based on the operation information regarding the operation of the plurality of second processors; and setting clock-rate ratios of the current operating clock rates relative to the maximum operating clock rates at which the plurality of second processors is capable of operating.

A program according to an embodiment of the present invention allows a computer to execute processing for controlling distributed processing using a first processor and a plurality of second processors. The processing includes the steps of requesting start of distributed processing in which processing is assigned to the plurality of second processors by the first processor controlling execution of an application program so that a plurality of processing jobs assigned to the plurality of second processors is integrated as a processing unit that provides a single function and so that the function corresponding to the processing unit is provided; obtaining operation information regarding operation of the plurality of second processors, the operation information including maximum operating clock rates at which the plurality of second processors is capable of operating, current operating clock rates of the plurality of second processors, and the number of cycles required in a predefined time for the processing assigned to the plurality of second processors; controlling assignment of the distributed processing corresponding to the processing unit based on the operation information regarding the operation of the plurality of second processors; and setting clock-rate ratios of the current operating clock rates relative to the maximum operating clock rates at which the plurality of second processors is capable of operating.

With the information processing apparatus, information processing method, and program according to the embodiments of present invention, by the execution of the application program by the first processor, distributed processing is executed. Based on the operation information regarding the first processor and the second processors, assignment of the distributed processing corresponding to the processing unit is controlled so that the ratio of processing capability in use relative to the total processing capability of the first processor and the second processors does not exceed 1.

According to the embodiments of the present invention, distributed processing can be executed. Particularly, since assignment of the distributed processing corresponding to the processing unit is controlled so that the ratio of processing capability in use relative to the total processing capability of the first processor and the second processors does not exceed 1, functions being executed as logical threads can be maintained in normal states while reliably executing information processing.

BRIEF DESCRIPTION OF THE DRAWINGS

The invention will now be described by way of example with reference to the accompanying drawings, throughout which like parts are referred to by like references, and in which:

Fig. 1 is a diagram showing a communication system according to an embodiment of the present invention;
Fig. 2 is a diagram for explaining a main memory;
Fig. 3 is a diagram for explaining a local storage of a subprocessor;
Fig. 4 is a diagram for explaining a key-management table;
Fig. 5 is a diagram showing an example structure of a software cell;
Fig. 6 is a diagram showing the structure of a data area of a software cell in a case where a status returning command is included as a DMA command;
Fig. 7 is a diagram showing the configuration of software stored in a main memory of an information processing controller shown in Fig. 1;

Fig. 8 is a functional block diagram for explaining functions that can be executed by the information processing controller;

Fig. 9 is a diagram for explaining REQUEST_information (conditions required by an application);

Fig. 10 is a diagram showing the relationship between power consumption PT and operating clock rate;

Fig. 11 is a flowchart for explaining a first distributed-processing assigning procedure;

Fig. 12 is a flowchart for explaining the first distributed-processing assigning procedure;

Fig. 13 is a diagram for explaining the statuses of processors before assignment of new processing;

Fig. 14 is a diagram for explaining the statuses of processors after assignment of processing;

Fig. 15 is a flowchart for explaining a second distributed-processing assigning procedure;

Fig. 16 is a flowchart for explaining a processor-assignment determining procedure;

Fig. 17 is a flowchart for explaining a processor-assignment determining procedure;

Fig. 18 is a diagram for explaining the statuses of processors after assignment of processing;

Fig. 19 is a diagram for explaining the statuses of processors before assignment of new processing; and

Fig. 20 is a diagram for explaining the statuses of processors after assignment of processing;

DESCRIPTION OF THE PREFERRED EMBODIMENTS

Now, embodiments of the present invention will be described with reference to the drawings.

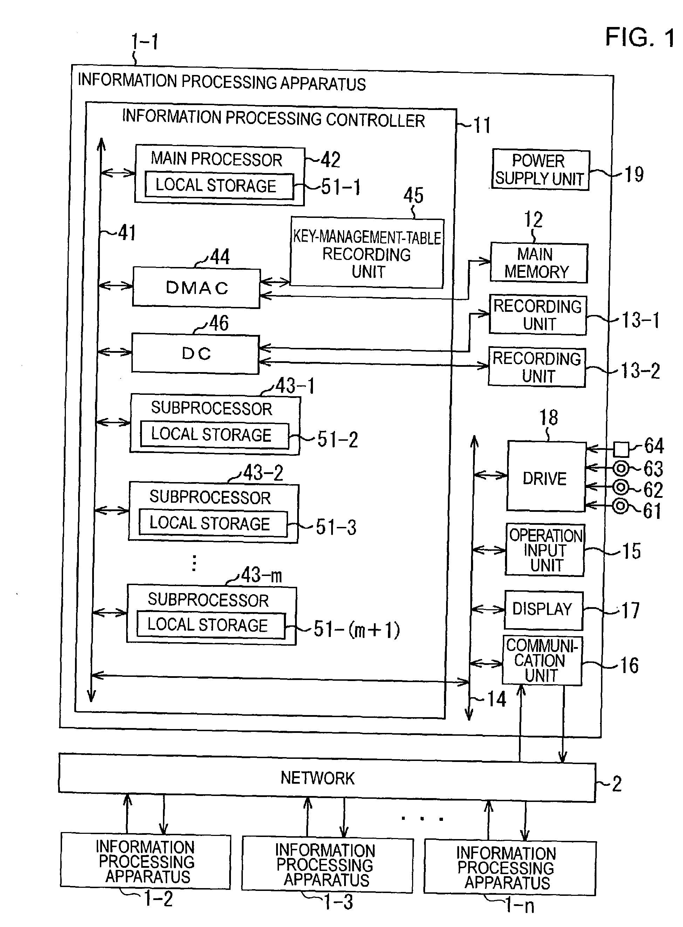

Fig. 1 is a diagram showing a communication system according to an embodiment of the present invention, which is capable of executing distributed processing. In this communication system, information processing apparatuses 1-1 to 1-n are connected to each other via a network 2, such as a home network, a local area network (LAN), a wide area network (WAN), or the Internet.

Upon receiving an instruction for executing distributed processing by a plurality of information processing apparatuses, the information processing apparatus 1-1 generates a software cell including data and a program needed for executing the processing requested, and sends the software cell to one of the information processing apparatuses 1-2 to 1-n via the network 2.

Each of the information processing apparatuses 1-2 to 1-2 receives the software cell sent from the information processing apparatus 1-1, and executes processing requested based on the software cell received. Upon executing the processing requested, each of the information processing apparatuses 1-2 to 1-n sends data obtained through the processing requested to the information processing apparatus 1-1 via the network 2. Hereinafter, the information processing apparatuses 1-1 to 1-n will be simply referred to as information processing apparatuses 1 when the individual information processing apparatuses 1-1 to 1-n need not be distinguished from each other.

The information processing apparatus 1-1 receives data sent from one of the information processing apparatuses 1-2 to 1-n, and executes certain processing based on the data received or records the data received.

The information processing apparatus 1-1 includes at least one information processing controller 11, a main memory 12, a recording unit 13-1, a recording unit 13-2, a bus 14, an operation input unit 15, a communication unit 16, a display 17, and a drive 18.

The information processing controller 11 executes various programs recorded in the main memory 12, and exercises overall control on the information processing apparatus 1-1. The information processing controller 11 generates a software cell, and sends the software cell to the communication unit 16 via the bus 14. The information processing controller 11 sends data fed from the communication unit 16 to the recording unit 13-1 or the recording unit 13-2. The information processing controller 11, based on a user's instruction input from the operation input unit 15, obtains specified data from the main memory 12, the recording unit 13-1, or the recording unit 13-2, and sends the data to the communication unit 16 via the bus 14.

Furthermore, the information processing controller 11 has assigned thereto an information-processing-apparatus ID that allows unique identification of the information processing apparatus 1-1 throughout the network 2.

The information processing controller 11 includes a bus 41, a main processor 42, subprocessors 43-1 to 43-m, a direct memory access controller (DMAC) 44, a key-management-table recording unit 45, and a disk controller (DC) 46.

The main processor 42, the subprocessors 43-1 to 43-m, the DMAC 44, the key-management-table recording unit 45, and the DC 46 are connected to each other via the bus 41. The main processor 42 has assigned thereto a main-processor ID for identifying the main processor 42. Similarly, the subprocessors 43-1 to 43-m have assigned thereto their respective subprocessor IDs for identifying the subprocessors 43-1 to 43-m.

When causing the information processing apparatuses 1-2 to 1-n connected via the network 2 to execute distributed processing, the main processor 42 generates a software cell, and sends the software cell to the communication unit 16 via the bus 41 and the bus 14. The main processor 42 may be configured to execute programs other than programs for management. In this case, the main processor 42 functions as a subprocessor.

The main processor 42 is capable of causing each of the subprocessors 43-1 to 43-m to execute an independent program to yield a result of a logically single function (logical thread). That is, the main processor 42 manages the scheduling of the execution of programs by the subprocessors 43-1 to 43-m, and exercises overall management on the information processing controller 11 (information processing apparatus 1-1).

The main processor 42 includes a local storage 51-1, and it temporarily stores data and programs loaded from the main memory 12 in the local storage 51-1. The main processor 42 reads data and programs from the local storage 51-1, and it executes various types of processing based on the data and programs.

The subprocessors 43-1 to 43-m process data by executing programs independently and in parallel under the control of the main processor 42. Furthermore, as needed, the arrangement may be such that a program executed by the main processor 42 cooperates with programs respectively executed by the subprocessors 43-1 to 43-m.

The subprocessors 43-1 to 43-m respectively include local storages 51-2 to 51-(m+1). The subprocessors 43-1 to 43-m temporarily store data and programs as needed in the local storages 51-2 to 51-(m+1), respectively. The subprocessors 43-1 to 43-m read data and programs from the local storages 51-2 to 51-(m+1), respectively, and execute various types of processing based on the data and programs.

Hereinafter, the subprocessors 43-1 to 43-m will be simply referred to as subprocessors 43 when the individual subprocessors 43-1 to 43-m need not be distinguished from each other. Similarly, hereinafter, the local storages 51-1 to 51-(m+1) will be simply referred to as local storages 51 when the individual local storages 51-1 to 51-(m+1) need not be distinguished from each other.

The DMAC 44 manages accesses by the main processor 42 and the subprocessors 43 to programs and data stored in the main memory 12, based on main-processor keys, subprocessor keys, and access keys.

The key-management-table recording unit 45 has recorded thereon main-processor keys, subprocessor keys, and access keys. The main-processor keys, subprocessor keys, and access keys will be described later in detail.

The DC 46 manages accesses by the main processor 42 and the subprocessors 43 to the recording unit 13-1 and the recording unit 13-2.

Although it is assumed herein that the information processing apparatus 1-1 includes only one information processing controller 11, alternatively, the information processing apparatus 1-1 may include a plurality of information processing controllers 11.

The main memory 12 is implemented, for example, by a RAM. The main memory 12 temporarily stores various types of data and programs executed by the main processor 42 and the subprocessors 43.

Each of the recording unit 13-1 and the recording unit 13-2 is implemented, for example, by a hard disk. The recording unit 13-1 and the recording unit 13-2 have recorded thereon various types of data and programs executed by the main processor 42 and the subprocessors 43. Furthermore, the recording unit 13-1 and the recording unit 13-2 record thereon data fed from the information processing controller 11. Hereinafter, the recording units 13-1 and 13-2 will be simply referred to as recording units 13 when the individual recording units 13-1 and 13-2 need not be distinguished from each other.

Furthermore, the information processing controller 11 is connected to the operation input unit 15, the communication unit 16, the display 17, and the drive 18 via the bus 14. The operation input unit 15 includes, for example, keys, buttons, a touch pad, a mouse, and so forth. In response to an operation input by the user, the operation input unit 15 sends information corresponding to the operation input to the information processing controller 11 via the bus 14.

The communication unit 16 sends software cells fed from the information processing controller 11 to the information processing apparatuses 1-2 to 1-n via the network 2. Furthermore, the communication unit 16 sends data sent from the information processing apparatuses 1-2 to 1-n to the information processing controller 11 via the bus 14.

The display 17 is implemented, for example, by a cathode ray tube (CRT) display or a liquid crystal display (LCD). The display 17 displays information generated through processing by the information processing controller 11 (including data generated by the execution of application programs, information such as user notification for the execution of application programs, and so forth), fed via the bus 14.

The drive 18 drives a magnetic disk 61, an optical disk 62, a magneto-optical disk 63, a semiconductor memory 64, or the like when these are mounted thereon, and obtains programs, data, or the like recorded thereon. As needed, the programs or data are transferred to the information processing controller 11 via the bus 14, and are recorded on the recording units 13 by the information processing controller 11.

Furthermore, the information processing apparatus 1 includes a power supply unit 19 for supplying electric power to the entire information processing apparatus 1.

Since the information processing apparatuses 1-2 to 1-n are constructed similarly to the information processing apparatus 1-1, descriptions of the constructions thereof will be omitted. Without limitation to the construction described above, however, functions may be added to or removed from the information processing apparatuses 1-2 to 1-m as needed, with components added or removed correspondingly to the functions.

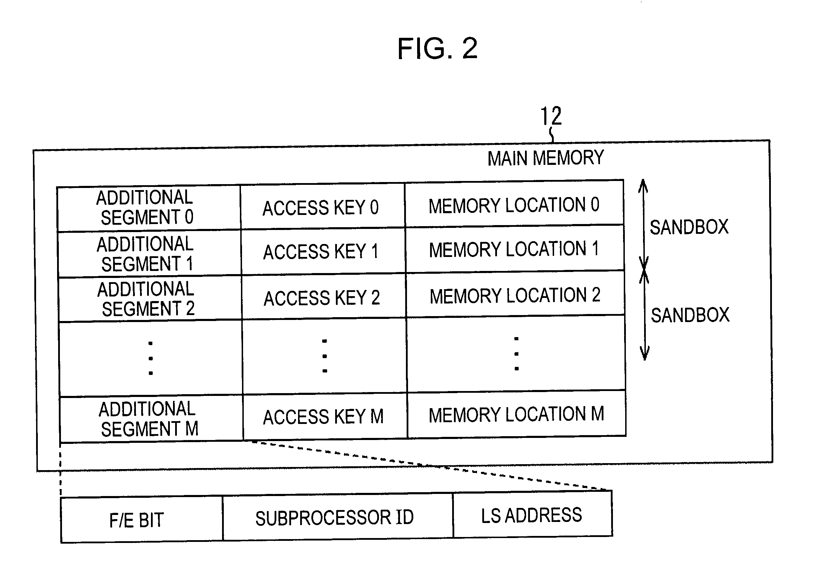

Next, processing that is executed when a subprocessor 43 accesses the main memory 12 will be described with reference to Figs. 2 to 4.

As shown in Fig. 2, the main memory 12 has a plurality of memory locations for specifying addresses. Each of the memory locations has assigned thereto an additional segment for storing information representing the status of data. The additional segment includes an F/E bit, a subprocessor ID, and an LS address (local storage address). Furthermore, each of the memory locations has assigned thereto an access key, which will be described later.

The F/E bit, when its value is "0", indicates that the associated data is data that has been read and is being processed by the subprocessor 43, or that the associated memory location is empty and the associated data is invalid data that is not current, so that it is not allowed to read data from the memory location. Furthermore, the F/E bit, when its value is "0", indicates that data can be written to the associated memory location, and the F/E bit is set to "1" when data has been written.

The F/E bit, when its value is "1", indicates that the data at the memory location has not been read by the subprocessor 43 and that the data is current data that has not been processed. The data at the memory location with the F/E bit indicating "1" can be read, and the F/E bit is set to "0" when the data has been read by the subprocessor 43. Furthermore, the F/E bit, when its value is "1", indicates that it is not allowed to write data to the associated memory location.

Furthermore, when the value of the F/E bit is "0" (reading is not allowed and writing is allowed), it is possible to set a reading reservation for the associated memory location. To set a reading reservation for the memory location with the F/E set to "0", the subprocessor 43 writes a subprocessor ID and LS address thereof to the additional segment of the memory location relevant to the reading reservation. Then, the subprocessor 43 writes data to the memory location relevant to the reading reservation. When the F/E bit has been set to "1" (reading is allowed and writing is not allowed), the data is read into the local storage 51 identified by the subprocessor ID and LS address written in advance in the additional segment as reading-reservation information.

When the data should be processed through multiple stages by a plurality of subprocessors 43, by controlling reading and writing of data at each of the memory locations in the manner described above, immediately after a subprocessor 43 that executes processing at an earlier stage writes processed data at a certain address of the main memory 12, another subprocessor 43 that executes processing at a later stage is allowed to read the data processed at the earlier stage.

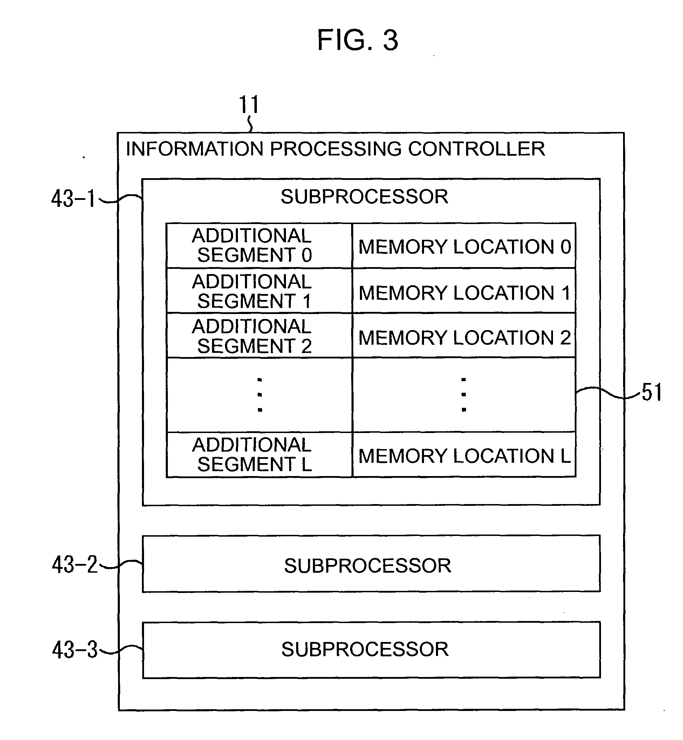

Furthermore, as shown in Fig. 3, the local storage 51 of the subprocessor 43 has a plurality of memory locations for specifying addresses. Each of the memory locations similarly has a additional segment assigned thereto. The additional segment includes a busy bit.

When the subprocessor 43 reads data stored in the main memory 12 into a memory location of the local storage 51 of the subprocessor 43, a reservation is made by setting the associated busy bit to "1". At a memory location with the busy bit set to "1", it is not allowed to store other data. When data has been read into the memory location of the local storage 51, the busy bit is set to "0", whereby it becomes possible to store other data.

Furthermore, as shown in Fig. 2, the main memory 12 connected to the information processing controller 11 includes a plurality of sandboxes. The sandboxes define areas of the main memory 12, and are assigned to the respective subprocessors 43 for exclusive uses by the respective subprocessors. That is, each of the subprocessors 43 is allowed to use the sandbox assigned thereto, but is not allowed to access data beyond the sandbox.

The main memory 12 has a plurality of memory locations, and each of the sandboxes is a set of memory locations.

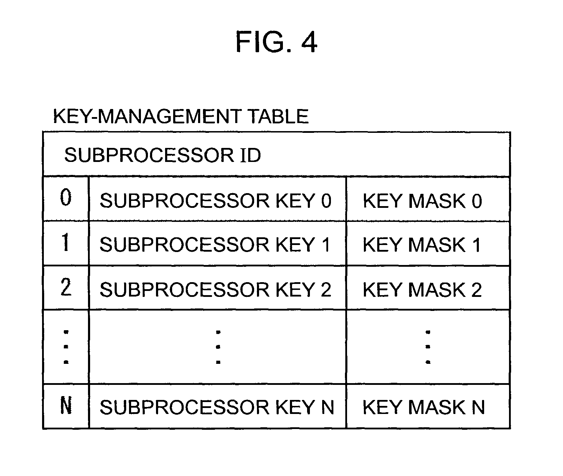

Furthermore, in order to achieve exclusive control of the main memory 12, a key-management table shown in Fig. 4 is used. The key-management table is recorded in the key-management-table recording unit 45, and is associated with the DMAC 44. Each entry in the key-management table includes a subprocessor ID, a subprocessor key, and a key mask.

When the subprocessor 43 accesses the main memory 12, the subprocessor 43 outputs a read command or a write command to the DMAC 44. The command includes a subprocessor ID identifying the subprocessor 43 and an address of the main memory 12 at the destination of the access request.

When the DMAC 44 executes the command fed from the subprocessor 43, the DMAC 44 checks the subprocessor key of the subprocessor 43 at the source of the access request with reference to the key-management table. Then, the DMAC 44 compares the subprocessor key of the source of the access request with the access key assigned to the memory location of the main memory 12 at the destination of the access request. The DMAC 44 executes the command fed from the subprocessor 43 only when these two keys coincide with each other.

Each of the key masks recorded in the key-management table shown in Fig. 4, with its bits that are set to "1", serves to set bits of the subprocessor key associated with the key mask to "0" or "1".

For example, let it be assumed that the subprocessor key is "1010". Usually, the subprocessor key allows access only to a sandbox having an access key "1010". However, when a key mask "0001" is associated with the subprocessor key, decision of matching between the subprocessor key and the access key is masked at the digit where the bit of the key mask is "1" (i.e., checking is omitted at the digit where the bit of the key mask is "1"). Thus, the subprocessor key "1010" allows access to sandboxes having an access key "1010" or "1011".

The exclusiveness of the sandboxes of the main memory 12 is implemented in the manner described above. That is, when data should be processed through multiple stages by a plurality of subprocessors 43, by the scheme described above, only a subprocessor 43 that executes processing at an earlier stage and a subprocessor 43 that executes processing at a later stage are allowed to access a certain address of the main memory 12, so that data can be protected.

For example, the value of the key masks can be changed as follows. First, immediately after the information processing apparatus 1-1 is activated, the values of the key masks are all "0". Let it be assumed that a program loaded in the main processor 42 cooperates with programs loaded in the subprocessors 43. When data of the result of processing by the subprocessor 43-1 is stored in the main memory 12 and the data of the processing result stored in the main memory 12 is input to the subprocessor 43-2, the area of the main memory 12 where the data of the processing result output from the subprocessor 43-1 is stored must be accessible by the subprocessor 43-1 and the subprocessor 43-2. In this case, the main processor 42 changes the values of the key masks as appropriate to provide a main-memory area that can be accessed by a plurality of subprocessors 43, whereby processing by the subprocessors 43 through multiple stages is allowed.

More specifically, for example, based on data sent from the information processing apparatuses 1-2 to 1-n, the subprocessor 43-1 executes certain processing, and stores processed data in a first area of the main memory 12. Then, the subprocessor 43-2 reads the data from the first area of the main memory 12, executes certain processing based on the data, and stores processed data in a second area of the main memory 12, which is different from the first area.

When the subprocessor key of the subprocessor 43-1 is "0100", the access key of the first area of the main memory 12 is "0100", the subprocessor key of the subprocessor 43-2 is "0101", and the access key of the second area of the main memory 12 is "0101", the subprocessor 43-2 is not allowed to access the first area of the main memory 12. Thus, the key mask of the subprocessor 43-2 is set to "0001", whereby the subprocessor 43-2 is allowed to access the first area of the main memory 12.

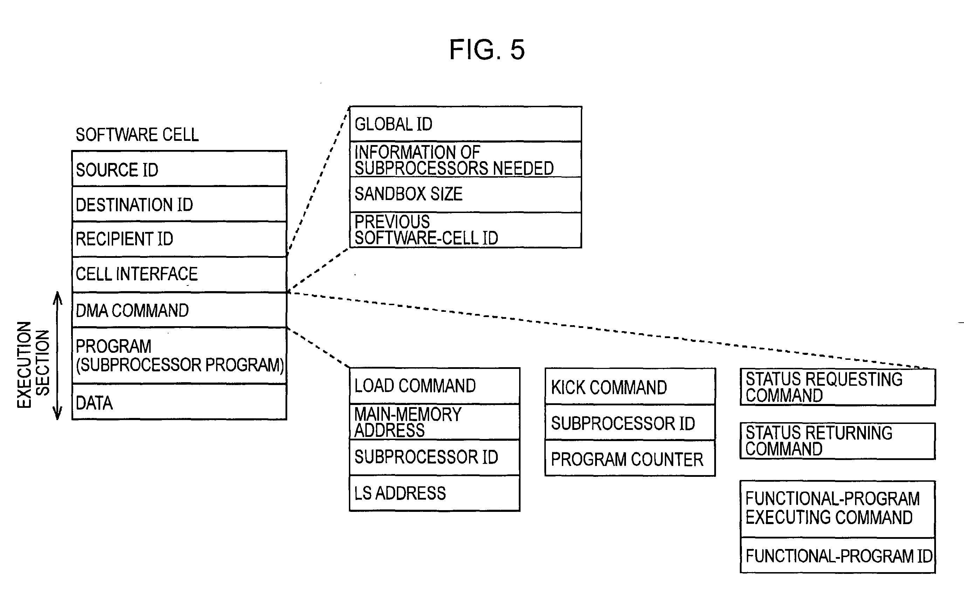

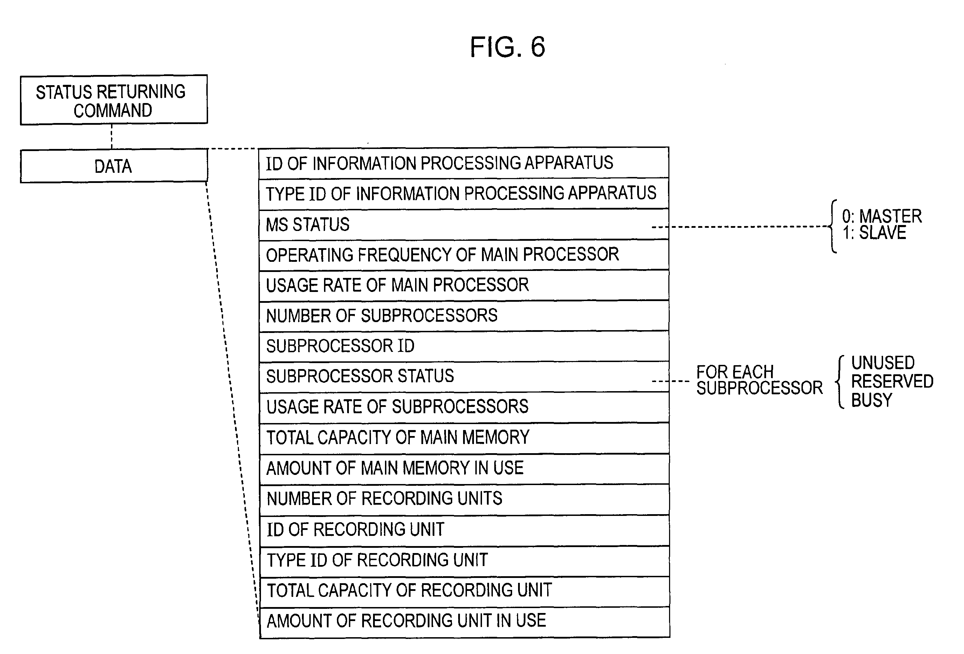

Next, processing that is executed when the information processing apparatus 1-1 generates software cells and distributed processing is executed by the information processing apparatuses 1-2 to 1-n based on the software cells will be described with reference to Figs. 5 and 6.

The main processor 42 of the information processing apparatus 1-1 generates software cells for executing processing, including commands, programs, and data, and sends the software cells to the information processing apparatuses 1-2 to 1-n via the network 2.

Fig. 5 is a diagram showing an example structure of a software cell.

The software cell includes a source ID, a destination ID, a recipient ID, a cell interface, a DMA command, a program, and data.

The source ID includes the network address of the information processing apparatus 1-1 at the source of the software cell, the information-processing-apparatus ID of the information processing controller 11 of the information processing apparatus 1-1, and the identifiers of the main processor 42 and the subprocessors 43 in the information processing controller 11 of the information processing apparatus 1-1 (main processor ID and subprocessor IDs).

The destination ID includes the network address of one of the information processing apparatuses 1-2 to 1-n at the destination of the software cell, the information-processing-apparatus ID of the information processing controller of the one of the information processing apparatuses 1-2 to 1-n, and the identifier of the main processor and the subprocessors in the information processing controller of the one of the information processing apparatuses 1-2 to 1-n.

The recipient ID includes the network address of the information processing apparatus 1-1 as the recipient of the result of execution of the software cell, the information-processing-apparatus ID of the information processing controller 11 of the information processing apparatus 1-1, and the identifiers of the main processor 42 and the subprocessors 43 in the information processing controller 11.

The cell interface is information regarding use of the software cell, and it includes a global ID, information of subprocessors needed, a sandbox size, and a previous software-cell ID.

The global ID allows unique identification of the software cell throughout the network 2, and it is generated based on the source ID and the date and time of the generation or sending of the software cell.

The information of subprocessors needed includes, for example, the number of subprocessors needed for the execution of the software cell. The sandbox size includes the amount of memory of the main memory and the local storages of the subprocessors needed for the execution of the software cell.

The previous software-cell ID is the identifier of a previous software cell in a group of software cells for requesting sequential execution involving streaming data or the like.

The execution section of the software cell includes DMA commands, a program, and data. The DMA commands include a series of DMA commands for the activation of the program. The program includes a subprocessor program executed by a subprocessor. The data herein refers to data that is processed by the program including the subprocessor program.

Furthermore, the DMA commands include a load command, a kick command, a functional-program executing command, a status requesting command, and a status returning command.

The load command is a command for loading information stored in the main memory 12 to the local storage of a subprocessor. The load command includes a main-memory address, a subprocessor ID, and an LS address. The main-memory address is the address of a certain area of the main memory from which the information is loaded. The subprocessor ID and the LS address represent the identifier of the subprocessor and the address of the local storage thereof to which the information is loaded.

The kick command is a command for starting execution of a program, and it includes a subprocessor ID and a program counter. The subprocessor ID identifies a subprocessor relevant to the kick, and the program counter represents an address for a program counter for program execution.

The functional-program executing command is a command that is issued by an apparatus (e.g., the information processing apparatus 1-1) for requesting another apparatus (e.g., one of the information processing apparatuses 1-2 to 1-n) to execute a functional program. The information processing controller of the apparatus that has received the functional-program executing command (e.g., one of the information processing apparatuses 1-2 to 1-n) identifies a functional program to be activated based on the functional-program ID.

The status requesting command is a command for requesting that apparatus information regarding the current operation status of one of the information processing apparatuses 1-2 to 1-2 represented by the destination ID be sent to the information processing apparatus 1-1 represented by the recipient ID.

The status returning command is a command with which the one of the information processing apparatuses 1-2 to 1-n that has received the status requesting command returns apparatus information to the information processing apparatus 1-1 represented by the recipient ID included in the status requesting command. The status returning command stores the apparatus information in a data area of the execution section.

Fig. 6 is a diagram showing the structure of the data area of a software cell in a case where the DMA command is a status returning command.

The information-processing-apparatus ID is an identifier for identifying an information processing apparatus 1 including an information processing controller, and it represents an ID of one of the information processing apparatuses 1-2 to 1-n that sends the status returning command. The information-processing-apparatus ID is generated, for example, when the one of the information processing apparatuses 1-2 to 1-n is powered on, by the main processor 42 of the information processing controller 11 of the one of the information processing apparatuses 1-2 to 1-n, for example, based on the date and time of the power on, the network address of the one of the information processing apparatuses 1-2 to 1-n, and the number of the subprocessors 43 of the one of the information processing apparatuses 1-2 to 1-n.

The information-processing-apparatus type ID includes a value representing a feature of the one of the information processing apparatuses 1-2 to 1-n. The feature of the one of the information processing apparatuses 1-2 to 1-n refers to information representing the type of the one of the information processing apparatuses 1-2 to 1-n, such as information representing that the one of the information processing apparatuses 1-2 to 1-2 is, for example, a hard disk recorder, a personal digital assistant (PDA), or a portable compact disc (CD) player. Alternatively, the information-processing-apparatus type ID may represent a functions of the one of the information processing apparatuses 1-2 to 1-n, such as video/audio recording or video/audio playback. The value representing the feature or function of the one of the information processing apparatuses 1-2 to 1-n is defined in advance, so that the information processing apparatus 1-1 that has received the status returning command can grasp the feature or function of the one of the information processing apparatuses 1-2 to 1-n by reading the information-processing-apparatus type ID.

The MS (master/slave) status represents whether the one of the information processing apparatuses 1-2 to 1-n operate as a master or a slave, representing that the apparatus is operating as a master apparatus when its value is "0" while the apparatus is operating as a slave apparatus when its value is "1".

The main-processor operating frequency represents the operating frequency of the main processor 42 of the information processing controller 11. The main-processor usage rate represents the usage rate of the main processor 42 for all the programs currently being executed by the main processor 42. The main-processor usage rate is a value representing the ratio of processing capability in use relative to the total processing capability of the main processor 42. For example, the main-processor usage rate is calculated by the unit of MIPS, which is a unit for evaluating processing capabilities of processors, or is calculated based on a processor usage time per a unit time.

The number of subprocessors represents the number of the subprocessors 43 in the information processing controller 11. The subprocessor IDs are identifiers of the subprocessors 43 in the information processing controller 11.

The subprocessor status represents the status of the subprocessor 43, such as "unused", "reserved", or "busy". "unused" indicates that a subprocessor 43 is not currently being used or reserved for use. "reserved" indicates that a subprocessor 43 is not currently being used but is reserved. "busy" indicates that a subprocessor 43 is currently being used.

The subprocessor usage rate represents the usage rate of a subprocessor 43 for a program currently being executed by the subprocessor 43 or a program reserved for execution by the subprocessor 43. That is, the subprocessor usage rate represents the current usage rate when the subprocessor status is "busy", while the subprocessor usage rate represents an estimated usage rate for scheduled usage when the subprocessor status is "reserved".

A set of the subprocessor ID, the subprocessor status, and the subprocessor usage rate is set for each subprocessor 43, so that a number of sets corresponding to the number of the subprocessors 43 in one information processing controller 11 is set.

The total main-memory capacity and the amount of main memory in use respectively represent the total capacity and the amount in use of the main memory 12 connected to the information processing controller 11.

The number of recording units represents the number of the recording units 13 connected to the information processing controller 11. The recording-unit ID is information for uniquely identifying a recording unit 13 connected to the information processing controller 11. The recording-unit type ID is information representing the type of a recording unit 13 (e.g., a hard disk, a CD±RW, a DVD±RW, a memory disk, an SRAM, or a ROM).

The total capacity of the recording unit and the amount in use of the recording unit respectively represent the total capacity and the amount in use of a recording unit 13 identified by the recording-unit ID.

A set of the recording-unit ID, the recording-unit type ID, the total capacity of the recording unit, and the amount in use of the recording unit is set for each recording unit 13, so that a number of sets corresponding to the number of the recording units connected to the information processing controller 11 is set. That is, when a plurality of recording units 13 is connected to a single information processing controller 11, different recording-unit IDs are assigned to the respective recording units 13, and recording-unit type IDs, the total capacities of the recording units, and the amounts in use of the recording units are also managed individually.

When causing the information processing apparatuses 1-2 to 1-n to execute distributed processing, the information processing apparatus 1-1 generates software cells, and sends the software cells to the information processing apparatuses 1-2 to 1-n via the network 2.

Various types of data that is sent from the information processing apparatus 1-1 to the information processing apparatuses 1-2 to 1-n are sent as contained in software cells, and repeated descriptions thereof will be refrained.

The main processor 42 of the information processing controller 11 of one of the information processing apparatuses 1-2 to 1-n generates the software cell of the structure described above, and sends the software cell to the information processing controller 11 of another information processing apparatus 1 via the network 2. The information processing apparatus 1 at the source, the information processing apparatus 1 at the destination, and the information processing apparatus at the recipient, and the information processing controllers 11 of these information processing apparatuses 1, are identified based on the source ID, the destination ID, and the recipient ID described earlier.

The main processor 42 in the information processing controller 11 of the information processing apparatus 1 that has received the software cell stores the software cell in the main memory 12. Furthermore, the main processor 42 at the destination reads the software cell, and processes a DMA command included therein.

More specifically, the main processor 42 at the destination first executes a load command. Then, information is loaded from an address of the main memory 12 specified by the load command to a specific area of the local storage 51 of a subprocessor 43 identified by the subprocessor ID and LS address included in the load command. The information loaded herein is a subprocessor program, data for the execution of the program, or other data specified, included in the software cell received.

Then, the main processor 42 outputs a kick command to the subprocessor 43 specified by the subprocessor ID included in the kick command, together with a program counter also included in the kick command.

The specified subprocessor executes the subprocessor program according to the kick command and the program counter. Then, the subprocessor stores the result of the execution in the main memory 12, and notifies the main processor 42 of the completion of the execution.

In the information processing controller 11 of the information processing apparatus at the destination, the processor that executes the software cell need not be a subprocessor 43, and the main processor 42 may be specified as a processor that executes the functional program included in the software cell.

In this case, the information processing apparatus 1 at the source sends a software cell to the information processing apparatus at the destination, the software cell including a main-memory program instead of a subprocessor program and data processed by the main-memory program, and including a load command as a DMA command, so that the main-memory program and data processed by the main-memory program are stored in the main memory 12. Then, the information processing apparatus 1 at the source sends a software cell to the information processing apparatus at the destination, the software cell including a main processor ID of the information processing controller 11 of the information processing apparatus 1 at the source, a main-memory address, an identifier such as a functional-program ID for identifying a main-memory program, and a program counter, and including a kick command or a functional-program executing command as a DMA command, so that the main-memory program is executed by the main processor 42.

As described above, in the network system according to this embodiment, the information processing apparatus 1 at the source sends a software cell including a subprocessor program or a main-memory program to the information processing apparatus 1 at the destination, and causes the subprocessor program to be loaded in a subprocessor 43 of the information processing controller 11 of the information processing apparatus 1 at the destination, so that the subprocessor program or the main-memory program can be executed by the information processing apparatus 1 at the destination.

When the program included in the software cell received is a subprocessor program, the information processing controller 11 of the information processing apparatus 1 at the destination of the software cell loads the subprocessor program in the specified subprocessor 43. Then, the specified subprocessor 43 executes the subprocessor program or the main-memory program included in the software cell.

Thus, without user's operations of the information processing apparatus 1 at the destination of the software cell, the subprocessor program or the main-memory program is automatically assigned from the information processing apparatus 1 at the source of the software cell to the information processing apparatus 1 at the destination, and is executed by the information processing controller 11 of the information processing apparatus 1 at the destination of the software cell. Furthermore, among the subprocessors 43, data is transferred by DMA, and using the sandboxes described earlier, even when data must be processed through multiple stages in a single information processing controller 11, the data can be processed quickly and securely.

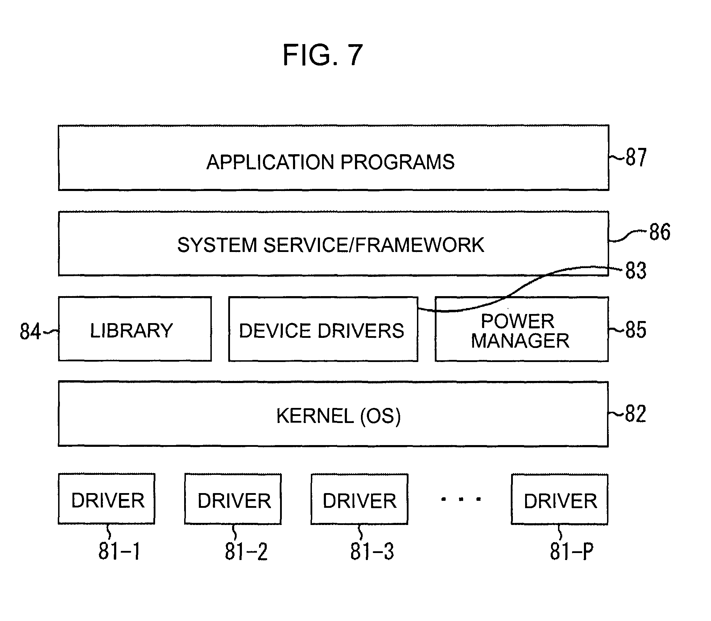

Fig. 7 shows a stack of software stored in the main memory 12 of the information processing controller 11. These software programs are recorded in the recording units 13 connected to the information processing controller 11 before the information processing apparatus 1 is powered on.

Drivers 81-1 to 81-p are special software for allowing operation of hardware. The drivers 81-1 to 81-p includes, for example, a mouse driver for allowing operation of a mouse connected to the operation input unit 15, a display driver for allowing operation of a video card for displaying images on the display 17, and a printer driver for allowing operation of a printer (not shown) connected via the communication unit 16.

A kernel (OS) 82 controls basic operation of the information processing controller 11. The kernel 82 manages various types of resources; for example, it transmits instructions issued by application programs 87 to the drivers 81-1 to 81-p. Furthermore, the kernel 82 manages software resources, such as the execution contexts of the application programs 87 (register sets, main-memory images, file handles, and so forth used by the application programs 87) or GUI components.

The device drivers 83 are drivers for executing functions of data input/output (transmission/reception) to and from the information processing controller 11 or the information processing apparatus 1. The device drivers 83 are provided for each information processing controller 11 in accordance with functions of the information processing apparatus 1, such as reception of broadcasting, monitor output, bitstream input/output, and network input/output.

The library 84 is also referred to as a DLL (dynamic link library), which is an independent file of an archive of functions commonly used for the execution of programs, and usually the file itself is referred to as a DLL. Subroutines are embedded within programs, while the library 84 is distinguished therefrom since it is loaded at the time of execution separately from programs. Since the functions provided as the library 84 need not be developed anew, the efficiency of development of the application programs 87 is improved. Furthermore, since the same program components can be shared among the plurality of application programs 87, the capacities of disks and memories can be saved.

A power manager 85 checks the operation statuses of the main processor 42 and the subprocessors 43 that are managed by the device drivers 83, and conditions for the execution of an application program that is to be executed according to a request, thereby managing power consumption of each of the processors. The power manager 85 determines assignment for distributed processing, or notifies a system service/framework 86 of canceling of the execution of the processing requested when the assignment for distributed processing is not allowed. That is, the power manager 85 controls distributed processing executed by the main processor 42 and the subprocessors 43 of the information processing controller 11. More specifically, the power manager 85 manages the operation statuses of the main processor 42 and the subprocessors 43, determines assignment of distributed processing for executing logical threads requested by the application programs 87, and loads programs and data to the relevant main processor 42 and subprocessors 43 for execution.

More specifically, the power manager 85 controls the operating clock rates of the main processor 42 and the subprocessors 43 to optimal values so that the processing requested by the application programs 87 can be executed and so that power consumption of the information processing controller 11 will be reduced. The ratio of the operating clock rate that is currently set to the maximum operating clock rate of each of the processors will be referred to as a processor operation rate. The processor operation rate can be controlled either independently or commonly among the main processor 42 and subprocessors 43. That is, the main processor 42 and the subprocessors 43 are potentially capable of operating at the maximum operating clock rate, but actually operate at uppermost operating clock rates based on processor operation rates set by the power manager 85.

That is, a processor operation rate SCPU_RATE[k] (where k is a number assigned for distinguishing a processor that is controlled by the power manager 85) is represented by uppermost operating clock rate / maximum operating clock rate SCPU_CK[k]. When the processor operation rates of the main processor 42 and the subprocessors 43 are commonly controlled, the processor operation rate SCPU_RATE[k] = SYSTEM_RATE.

A processor usage rate SCPU_STAT[k] for each processor is represented by the number of clock cycles used for the execution of an application program in a predefined period (the period of one cycle is the inverse of the maximum operating clock rate of the CPU) / the predefined time / the maximum operating clock rate SCPU_CK[k].

For example, when the main processor 42 and the subprocessors 43 are potentially capable of operating at a maximum operating clock rate of 1.2 MHz, when it is possible to set 1.0, 0.5, and 0.25 as a processor operation rate, the uppermost operating clock rate can be 1.2 MHz, 600 Hz, and 300 Hz. More specifically, when the processor operation rate is set to be 0.5, the uppermost operating clock rate is 1.2 MHz x 0.5 = 600 Hz. When it takes 300 clock cycles to execute a certain application program in a predefined time of 1 second, the processor usage rate SCPU_STAT[k] is 300 clock cycles / 1 sec / 1.2 MHz = 0.25.

That is, the processor usage rate and the processor operation rate satisfy the relationship expressed by expression (1) below:

$$0 \leq processor\ usage\ rate\ (SCPU\_STAT[k]) \leq processor$$

$$operation\ rate\ (SCPU\_RATE[k]) \leq 1.0 \quad (1)$$

Furthermore, the power manager 85 sets a suspend mode for subprocessors 43 to which processing is not assigned so that power consumption of the information processing controller 11 can be reduced.

The system/service framework 86 is a set of software modules that assigns processing executed by the application programs 87 to a plurality of subprocessors 43 of the information processing apparatus 1 so that distributed processing is executed, or provides a system service for causing a plurality of information processing apparatuses 1 to execute distributed processing.

The application programs 87 are software programs for achieving specific purposes, for example, controlling reception of broadcasting waves, recording or playback of content, processing relating to three-dimensional graphics, exchange of electronic mails, and browsing of Web pages, using the information processing controller 11. For example, when an application program 87 for processing three-dimensional graphics is executed, processing for one screen is divided on a pixel-by-pixel basis, and processing is executed in parallel by a plurality of processors based on the same program and model data. That is, when the application program 87 for processing three-dimensional graphics is executed using the information processing controller 11, the system service/framework 86 assigns processing divided on a pixel-by-pixel basis respectively to a plurality of subprocessors 43 so that the processing is executed in parallel.

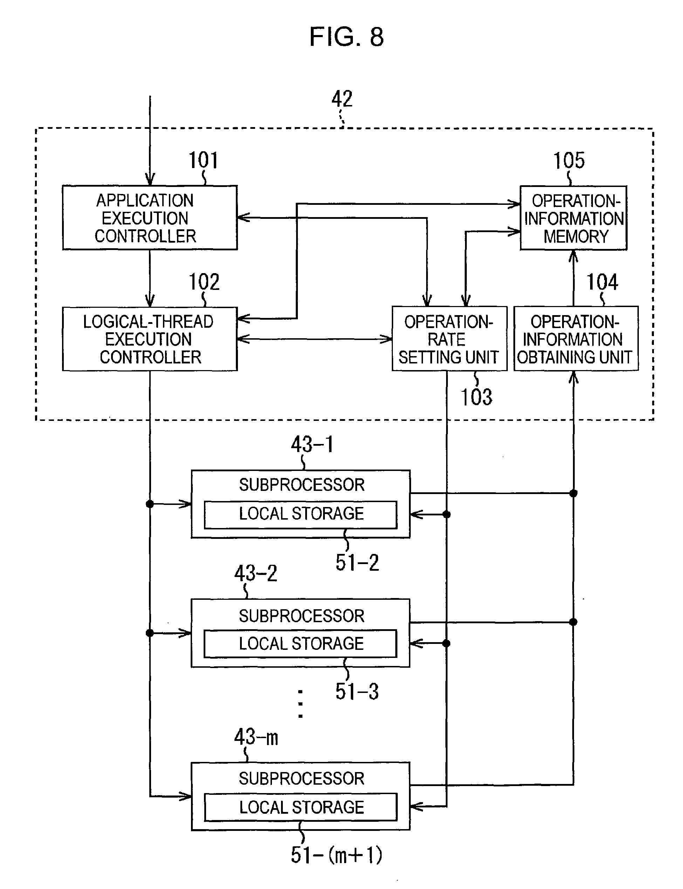

Fig. 8 is a functional block diagram for explaining the functions of the information processing controller 11 for managing power consumption of each processor and controlling assignment of distributed processing.

Referring to Fig. 8, an application execution controller 101, a logical-thread execution controller 102, an operation-rate setting unit 103, an operation-information obtaining unit 104, and an operation-information memory 105 are basically functions that are implemented by the main processor 42 of the information processing apparatus 1.

The hardware for implementing these functions need not be as described above. For example, some of the functions implemented by the main processor 42 may be implemented by different hardware. Furthermore, these functions may be implemented all within a single chip or by individual chips.

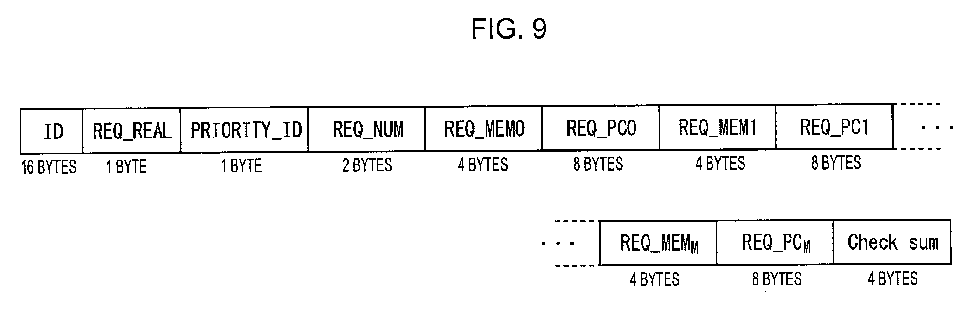

The application execution controller 101 executes processing for executing application programs. Furthermore, when causing one of the subprocessors 43 to execute distributed processing, the application execution controller 101 sends REQUEST_information (application request condition) shown in Fig. 9 to the logical-thread execution controller 102 as logical-thread setting information, thereby requesting generation of a logical thread. A logical thread is a processing unit that provides a single function by integrating a plurality of programs assigned as needed to the respective subprocessors 43 (the programs may be related to the same application programs or different application programs). That is, a plurality of programs assigned as needed to the respective subprocessors 43 are programs stored in certain storage areas of the main memory 12. The programs are loaded from the main memory 12 to the local storages 51 of the relevant subprocessors 43 and executed by the subprocessors 43 in response to requests from application programs that are executed under the control of the application execution controller 101.

In the REQUEST_information (application request condition) fed from the application execution controller 101 to the logical-thread execution controller 102, 16-byte ID (application ID) for identifying an application, 1-byte REQ_REAL information indicating whether it is required to finish processing in a predefined time, 1-byte PRIORITY_ID representing a subprocessor ID of a subprocessor that is to be prioritized when determining subprocessor assignment, and REQ_NUM information representing the number of subprocessors required for requested processing are provided in the beginning. Then, REQ_MEM information indicating the amount of memory that is to be occupied for the requested processing by the processor to which the processing is assigned, and REQ_PC information representing the number of processing cycles that will be occupied by the requested processing in the predefined time are stored. A number of sets of REQ_NUM information and REQ_PC information corresponding to the number of subprocessors needed for the processing is stored. More specifically, as REQ_MEM 0 and REQ PC 0, the amount of memory and the number of clock cycles required for the main processor 42 are stored. Then, as REQ_MEM 1 and REQ_PC 1, REQ_MEM 2 and REQ_PC 2 ..., the amounts of memory and the numbers of clock cycles required for the respective subprocessors are stored. The order of storing the sets of REQ_MEM and REQ_PC information associated with the respective subprocessors is the descending order of the number of clock cycles required, and the descending order of the amount of memory required when the number of clock cycles required is the same.

In this example, REQ_REAL = 1 indicates the need for real-time processing, and the number of processing cycles is a value corresponding to the amount of processing required for executing an application. Requests for executing application programs and REQUEST_information can also be fed from the information processing controller 11 of another information processing apparatus 1 via the network 2.

Now, the description returns to Fig. 8.

The logical-thread execution controller 102 includes a register and a memory, and it generates and deletes logical threads associated with application programs executed by the application execution controller 101. More specifically, the logical-thread execution controller 102, based on REQUEST_information shown in Fig. 9 and the operation statuses of the subprocessors 43 stored in the operation-information memory 105, assigns distributed processing suitably to the subprocessors 43, thereby monitoring the statuses of the logical threads generated and controlling operations thereof while suppressing increase in power consumption. The logical-thread execution controller 102 creates a table describing the overall management information of the information processing controller 11, and a table describing information needed for executing each logical thread that is executed, and controls the execution of logical threads by referring to and updating the information in the table.

In addition to REQUEST_information described above, information that is managed by the logical-thread execution controller 102 includes NUM_SCPU representing the number of the subprocessors 43 of the information processing controller 11, TIME_DEF representing a predefined time, e.g., 1 sec, that is used as a reference time for determining assignment of distributed processing, MEM_MARGIN representing a margin regarding the memory usage rate, THREAD_OVERHEAD[k] representing an amount of overhead in switching of threads (applications) by a k-th processor, SCPU_RATE[k] representing a value (0 to 1) that is set as the processor operation rate of the k-th processor, RATE_MARGIN representing a margin of the processor operation rate relative to the processor usage rate of the k-th processor, and N_GIVEUP representing the number of iterations at which an assignment processing loop is to be terminated when assignment does not succeed.

As the k-th processor, 0th processor refers to the main processor 42, and 1st and subsequent processors refer to the subprocessors 43. As MEM_MARGIN, for example, a value such as 10 Kbytes is used. As RATE_MARGIN, for example, a value such as 0.1 is used. These values are used for determining assignment of distributed processing. The amount of overhead in switching of threads refers to the number of clock cycles needed to save context of processing currently being executed by the processor from the local storage 51 and restoring the previous context.

When the processor operation rates are controlled commonly among all the processors, the value that is set as the processor operation rates is denoted as SYSTEM_RATE, and the following expression holds:

$$\text{Uppermost operating clock rate of processor} = \text{Maximum operating clock rate} \times \text{Processor operation rate} \quad (2)$$

The operation-rate setting unit 103, under the control of the logical-thread execution controller 102, sets the processor operation rates SCPU_RATE[k] or SYSTEM_RATE of the main processor 42 and subprocessors 43, and registers the value of the processor operation rates SCPU_RATE[k] or SYSTEM_RATE in the operation-information memory 105.

The operation-information obtaining unit 104 obtains operation information of the subprocessors 43, and sends the operation information to the operation-information memory 105.

The operation-information memory 105 stores operation information of the subprocessors 43 and operation information of the main processor 42, obtained through processing by the operation-information obtaining unit 104 in relation to at least part of the storage area of the local storage 51-1, and the processor operation rate SCPU_RATE[k] or SYSTEM_RATE of the main processor 42 and the subprocessors 43, set by the operation-rate setting unit 103.

Information recorded in the operation-information memory 105 includes, for example, MEM_CPU[k] (Kbytes) representing an amount of memory that can be used by the main processor 42 or the subprocessor 43, SCPU_CK[k] representing the maximum operating clock rate of the k-th main processor 42 or subprocessor 43 of the information processing controller 11, SCPU_STAT[k] representing the processor usage rate of the k-th main processor 42 or subprocessor 43, SCPU APPNUM[k] representing the number of applications currently being executed by the k-th main processor 42 or subprocessor 43, SCPU_SUSPEND[k] as a flag indicating whether a program can be assigned to the k-th main processor 42 or subprocessor 43, and so forth. When SCPU_SUSPEND[k] = 0, a program can be assigned to the k-th main processor 42 or subprocessor 43. When SCPU_SUSPEND[k] = 1, it is prohibited to assign a program to the k-th main processor 42 or subprocessor 43.

The current operating clock rate of the k-th main processor 42 or subprocessor 43 is represented as SCPU_CK [k] $\times$ SCPU_RATE[k]. Furthermore, the processor operation rate and the processor usage rate satisfy the relationship expressed by expression (3) below. That is, when the processor operation rate is controlled commonly among all the processors, the processor operation rate and the processor usage rate satisfy the relationship expressed by expression (4) below.

$$0 \leq \text{SCPU\_STAT[k]} \leq \text{SCPU\_RATE[k]} \leq 1 \quad (3)$$

$$0 \leq \text{SCPU\_STAT[k]} \leq \text{SYSTEM\_RATE} \leq 1 \quad (4)$$

Furthermore, SCPU_STAT[k] representing the processor usage rate of the k-th main processor 42 or subprocessor 43 increases as distributed processing by application programs is executed. For example, in the case of the first application, the increase in SCPU_STAT[k] is expressed by expression (5) below, and in the case of the second or subsequent application, the increase in SCPU_STAT[k] is expressed by expression (6) below.

$$\text{Increase in SCPU\_STAT[k]} = (\text{REQ\_PC[k]} / \text{TIME\_DEF}) / \text{SCPU\_CK[k]} \quad (5)$$

$$\text{Increase in SCPU\_STAT[k]} = ((\text{REQ\_PC[k]} + \text{THREAD\_OVERHEAD[k]}) / \text{TIME\_DEF}) / \text{SCPU\_CK[k]} \quad (6)$$

Next, power consumption of the main processor 42 and subprocessors 43 in the information processing controller 11 will be described.

The power consumption of individual main processor 42 and subprocessors 43 in the information processing controller 11 is determined by power consumption that increases in proportion to the current processor operation rate and power consumption that increases in proportion to the current processor operation rate. The power consumption PT-A that increases in proportion to the current processor operation rate is an amount of electric power that is consumed even when the main processor 42 or the subprocessor 43 is not being used by distributed processing, and is expressed by expression (7) below. PA denotes a proportionality coefficient of the number of operation clocks, which is determined in advance by the hardware configuration. The power consumption PT-B that increases in proportion to the current processor usage rate is expressed by equation (8) below. K denotes a proportionality coefficient of the number of clock cycles used, which is determined in advance by the hardware configuration.

$$\text{PT-A} = \text{PA(W/Cycle)} \times \text{SCPU\_RATE[k]} \times \text{SCPU\_CK[k]} \quad (7)$$

$$\text{PT-B} = \text{K(W/Cycle)} \times \text{SCPU\_STAT[k]} \times \text{SCPU\_CK[k]} \quad (7)$$

Thus, the total power consumption $\Sigma$PT of the main processor 42 and subprocessors 43 in the information processing controller 11 is expressed by expression (9) below. When the processor operation rates SCPU_RATE[k] are not set independently for the individual processors but a common value (SYSTEM_RATE) is used, the total power consumption $\Sigma$PT of the main processor 42 and subprocessors 43 in the information processing controller 11 is expressed by expression (10) below.

$$\Sigma PT = \Sigma(PA \times SCPU\_RATE[k] \times SCPU\_CK[k] + K \times$$

$$SCPU\_STAT[k] \times SCPU\_CK[k]) \quad (9)$$

$$\Sigma PT = \Sigma(PA \times SYSTEM\_RATE \times SCPU\_CK[k] + K \times SCPU\_STAT[k]$$

$$\times SCPU\_CK[k]) \quad (10)$$

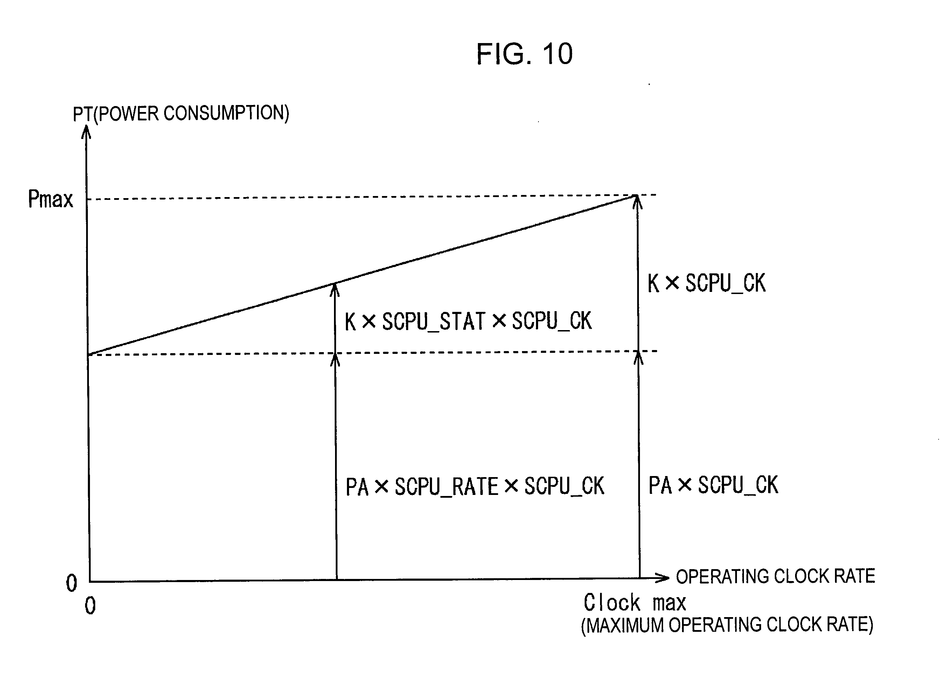

Fig. 10 is a diagram showing the relationship between power consumption PT and the operating clock rates of the individual main processor 42 and subprocessors 43 in the information processing controller 11.

As shown in Fig. 10, the power consumption PT increases as the processor operation rate increases. However, even when the processor operation rate is 0, as long as clock signals are fed to the processor, constant power consumption that does not depend on processing by applications, such as power consumed for the control of the processor and the bus, occurs. The clock signals fed to the main processor 42 and subprocessors 43 are represented by SYSTEM_RATE x SCPU_CK. That is, even when the processor operation rate is the same (SCPU_STAT), power consumption increases correspondingly to the constant power consumption as the processor operation rate (SYSTEM_RATE or SCPU_RATE [k]) increases.

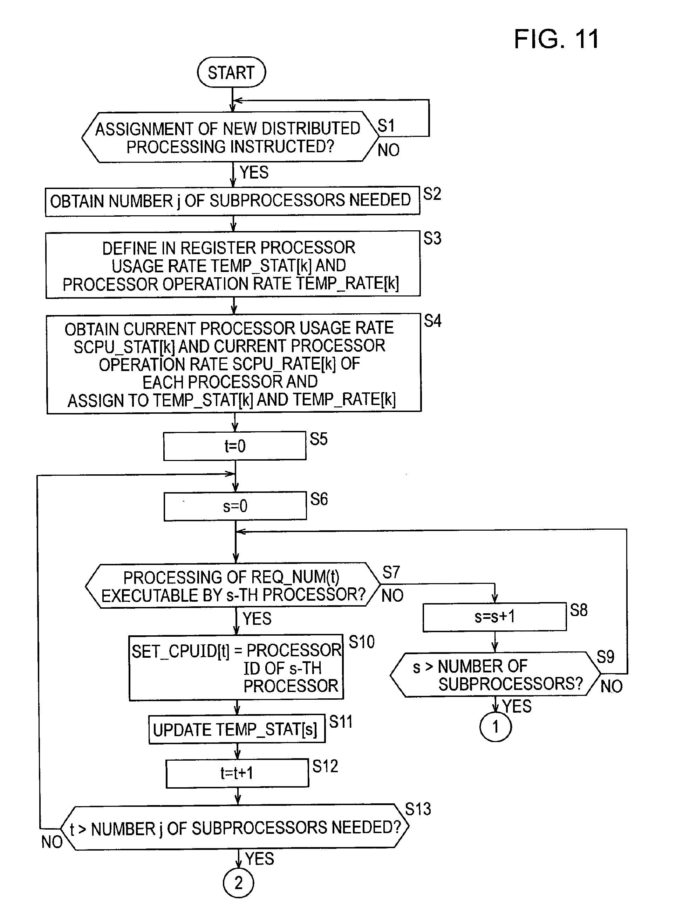

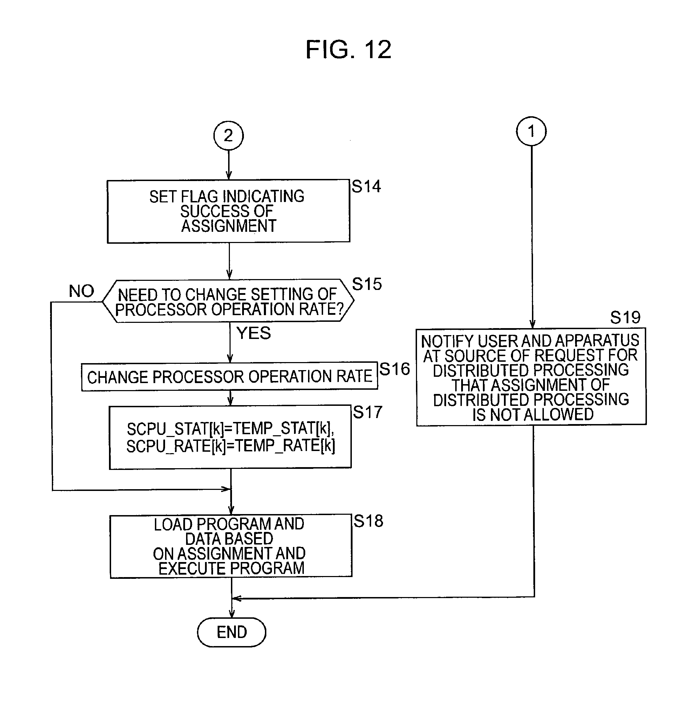

Next, a first distributed-processing assignment determining procedure that is executed by an information processing apparatus in this embodiment will be described with reference to flowcharts shown in Figs. 11 and 12.

In step S1, the logical-thread execution controller 102 receives REQUEST_information from the application execution controller 101, and determines whether assignment of new distributed processing has been instructed. When it is determined in step S1 that assignment of new distributed processing has not been instructed, step S1 is repeated until it is determined that assignment of new distributed processing has been instructed.

When it is determined in step S1 that assignment of new distributed processing has been instructed, in step S2, the logical-thread execution controller 102 obtains the number j of subprocessors needed for executing the distributed processing that is to be assigned according to the request from information included in REQUEST_information fed thereto.

In step S3, the logical-thread execution controller 102 defines a processor usage rate TEMP_STAT[k] and a processor operation rate TEMP_RATE[k] correspondingly to values in an internal register that stores tentative values in the course of calculation of assignment of processing to each of the processors.

In step S4, the logical-thread execution controller 102 obtains the values of the current processor usage rate SCPU_STAT[k] and processor operation rate SCPU_RATE[k] of each of the processors before the assignment of distributed processing from the operation-information memory 105, and assigns the values to the processor usage rate TEMP_STAT[k] and the processor operation rate TEMP_RATE[k].

It will be assumed herein that in an information processing controller 11 including a plurality of subprocessors 43, a certain application program is already being executed, and execution of another application program is newly requested from another information processing apparatus 1 connected via the network 2. Furthermore, it is assumed herein that values that are currently managed by the logical-thread execution controller 102 or the operation-information memory 105 are REQ_REAL = 1 (real-time processing is needed), NUM_SCPU = 3, TIME_DEF = 1 (1 second), RATE_MARGIN = 0.1, and MEM_MARGIN = 10.

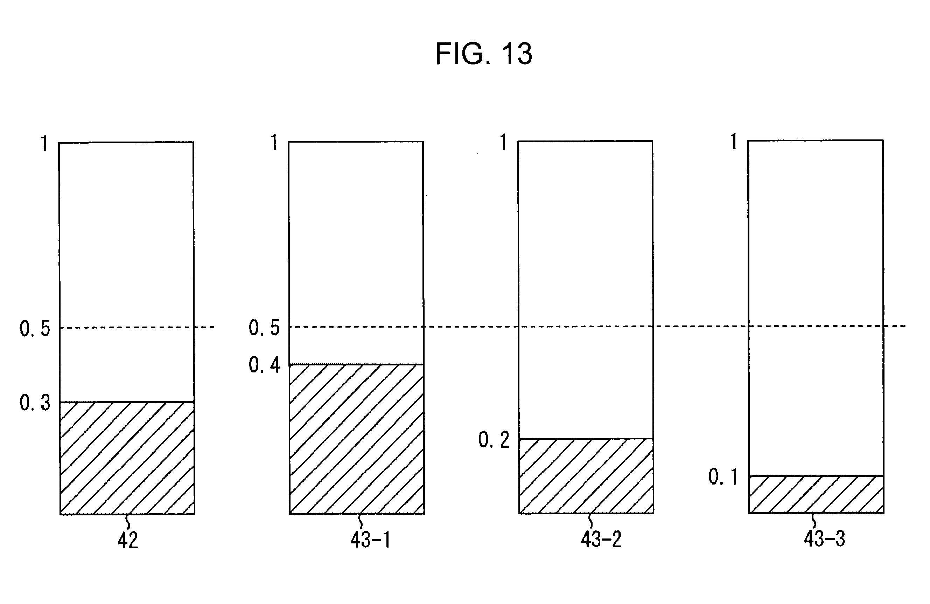

The relationship between the processor operation rate SYSTEM_RATE (it is assumed herein that the processor operation rate is common among all the processors) and the processor usage rate SCPU_STAT[k] of the main processor 42 and the subprocessors 43-1 to 43-3 when a certain application program is already being executed will be described with reference to Fig. 13. For simplicity of description, it is assumed that THREAD_OVERHEAD is 0.

The processor operation rate SYSTEM_RATE of the main processor 42 and the subprocessors 43-1 to 43-3 herein is 0.5, and the processor usage rate SCPU_STAT[0] of the main processor 42 represented by k = 0 is 0.3. Thus, the processor usage rate SCPU_STAT[0]/the processor operation rate SYSTEM_RATE is 0.3/0.5. MEM_CPU[0] representing the amount of memory that can be used by the main processor 42 is 5,000 (Kbytes). The amount of memory that is currently being used by the main processor 42 is 1,000 (Kbytes). SCPU_CK[0] representing the maximum operating clock rate is 1,000. The processor usage rate SCPU_STAT[1] of the subprocessor 43-1 represented by k = 1 is 0.4, so that the processor usage rate SCPU_STAT[1]/the processor operation rate SYSTEM_RATE is 0.4/0.5. MEM_CPU[1] representing the amount of memory that can be used by the subprocessor 43-1 is 100 (Kbytes). The amount of memory that is currently being used by the subprocessor 43-1 is 20 (Kbytes). SCPU_CK[1] representing the maximum operating clock rate of the subprocessor 43-1 is 1,000. The processor usage rate SCPU_STAT[2] of the subprocessor 43-2 represented by k = 2 is 0.2, so that the processor usage rate SCPU_STAT[2]/the processor operation rate SYSTEM_RATE is 0.2/0.5. MEM_CPU[2] representing the amount of memory that can be used by the subprocessor 43-2 is 100 (Kbytes). The amount of memory that is currently being used by the subprocessor 43-2 is 10 (Kbytes). SCPU_CK[2] representing the maximum operating clock rate of the subprocessor 43-2 is 1,000. The processor usage rate SCPU_STAT[3] of the subprocessor 43-3 represented by k = 3 is 0.1, so that the processor usage rate SCPU_STAT[3]/the processor operation rate SYSTEM_RATE is 0.1/0.5. MEM_CPU[3] representing the amount of memory that can be used by the subprocessor 43-3 is 100 (Kbytes). The amount of memory that is currently being used by the subprocessor 43-3 is 5 (Kbytes). SCPU_CK[3] representing the maximum operating clock rate of the subprocessor 43-3 is 1,000.

The operation conditions of the application program that is to be newly executed according to the request are such that REQ_NUM representing the number of subprocessors needed is 2, REQ_PC[0] representing the number of processing cycles required for the main processor 42 is 100, REQ_MEM[0] representing the amount of memory required for the main processor 42 is 100 (Kbytes), REQ_PC[1] representing the number of processing cycles required for the first subprocessor 43 is 400, REQ_MEM[1] representing the amount of memory required for the first subprocessor 43 is 50 (Kbytes), REQ_PC[2] representing the number of processing cycles required for the second subprocessor 43 is 200, and REQ_MEM[2] representing the amount of memory required for the second subprocessor 43 is 30 (Kbytes).

Based on these conditions, in the procedure descried below, distributed processing is assigned so that the conditions are satisfied.

In step S5, the logical-thread execution controller 102 sets a value t of the register representing for which processor assignment of processing is currently being determined in relation to REQ_NUM representing the number of subprocessors needed for the processing requested. The processor represented by t = 0 is the main processor 42, and a processor represented by $t \geq 1$ is one of the subprocessors 43.

In step S6, the logical-thread execution controller 102 sets a register value s = 0, the value s representing to which processor processing can be assigned among processors in the information processing controller 11.

In step S7, the logical-thread execution controller 102 determines whether processing of REQ_NUM(t) can be executed by the s-th processor.

More specifically, the logical-thread execution controller 102 adds an amount of increase in the processor usage rate SCPU_STAT[s] due to the processing of REQ_NUM(t), and determines whether the processing of REQ_NUM (t) can be processed by the s-th processor on condition that the processor usage rage SCPU_STAT[s] + RATE_MARGIN does not exceed 1 and the amount of memory required for the processing of REQ_NUM(t) satisfies (REQ_MEM[s] + MEM_MARGIN) < (MEM[s]_CPU - Amount of memory currently being used).

When it is determined in step S7 that the processing of REQ_NUM(t) cannot be executed by the s-th processor, in step S8, the logical-thread execution controller 102 changes the register value s so that s = s + 1.

In step S9, the logical-thread execution controller 102 determines whether s > the number of subprocessors 43 in the information processing controller 11. When it is not determined in step S9 that s > the number of subprocessors 43 in the information processing controller 11, the procedure returns to step S7, and subsequent steps are repeated. When it is determined in step S9 that s > the number of subprocessors 43 in the information processing controller 11, the procedure proceeds to step S19 described later.

When it is determined in step S7 that the processing of REQ_NUM(t) can be executed by the s-th processor, in step S10, the logical-thread execution controller 102 writes the processor ID of the s-th processor (main processor ID or subprocessor ID) to SET_CPUID[t], which corresponds to an internal register representing an identification number of a processor that satisfies the necessary conditions.

In step S11, the logical-thread execution controller 102 updates the processor usage rate TEMP_STAT[s] associated with the value of the internal register for storing a tentative value in the course of calculation for assignment so that the processor usage rate corresponding to the processing by the s-th processor is added.

In step S12, the logical-thread execution controller 102 changes the register value t so that t = t + 1.

In step S13, the logical-thread execution controller 102, with reference to the register value t, determines whether t > j (j is the number of subprocessors needed for distributed processing). When it is not determined in step S13 that t > j, the assignment of the processing requested has not been finished. Thus, the procedure returns to step S6, and subsequent steps are repeated.

When it is determined in step S13 that t > j, the assignment of the processing requested has been finished. Then, in step S14, the logical-thread execution controller 102 sets a flag indicating success of the assignment, i.e., SET_NG = 0.

In step S15, the logical-thread execution controller 102 compares the processor operation rates TEMP_RATE [k] of all the processors with the latest processor usage rate TEMP_STAT[k] to determine whether the setting of the processor operation rates must be changed due to the assignment of the new distributed processing.

When it is determined in step S15 that the setting of the processor operation rates must be changed, i.e., when the processor operation rate TEMP_RATE[k] < the processor usage rate TEMP_STAT[k] for one of the processors, in step S16, the logical-thread execution controller 102 calculates a new processor operation rate and sends the result to the operation-rate setting unit 103. The operation-rate setting unit 103 changes the setting of the processor operation rate of the associated main processor 42 or subprocessor 43.

In step S17, the logical-thread execution controller 102 updates the processor usage rate SCPU_STAT[k] and the processor operation rate SCPU_RATE[k] of each of the processors, stored in the operation-information memory 105, to the processor usage rate TEMP_STAT[k] and the processor operation rate TEMP_RATE[k] determined by the calculation of assignment.

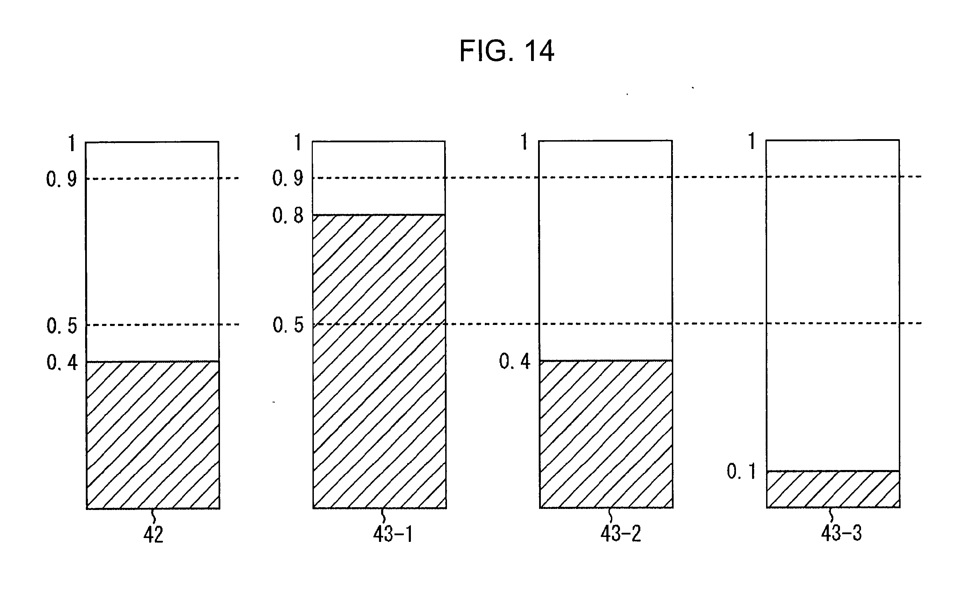

The result of the assignment of new distributed processing and setting of the processor operation rate will be described with reference to Fig. 14.

In the state described with reference to Fig. 13, when assignment of distributed processing for which REQ_NUM representing the number of subprocessors needed is 2, REQ_PC[O] representing the number of processing cycles required for the main processor 42 is 100, REQ_MEM[0] representing the amount of memory required for the main processor 42 is 100 (Kbytes), REQ_PC[1] representing the number of processing cycles required for the first subprocessor 43 is 400, REQ_MEM[1] representing the amount of memory required for the first subprocessor 43 is 50 (Kbytes), REQ_PC[2] representing the number of processing cycles required for the second subprocessor 43 is 200, and REQ_MEM[2] representing the amount of memory required for the second subprocessor 43 is 30 (Kbytes), is requested, as shown in Fig. 14, the processor usage rate SCPU_STAT[0] of the main processor 42 represented by k = 0 becomes 0.4, the processor usage rate SCPU_STAT[1] of the subprocessor 43-1 represented by k = 1 becomes 0.8, the processor usage rate SCPU_STAT[2] of the subprocessor 43-2 represented by k = 2 becomes 0.4, and the processor usage rate SCPU_STAT[3] of the subprocessor 43-3 represented by k = 3 remains 0.1.

Since RATE_MARGIN = 0.1, when the processor operation rates are controlled individually after the assignment of the new distributed processing, only the processor operation rate SCPU_RATE[1] of the subprocessor 43-1 is changed to 0.9. On the other hand, when the processor operation rates are controlled commonly after the assignment of the new distributed processing, since the processor operation rates of all the processors are RATE_MARGIN = 0.1, SYSTEM_RATE is changed to 0.9. Furthermore, in each of the processors, by the assignment of the new distributed processing, the amount of memory that can be used by the main processor 42 (i.e., MEM_CPU[0] - the amount of memory currently being used) become 3,900 (Kbytes), the amount of memory that can be used by the subprocessor 43-1 (i.e., MEM_CPU[1] - the amount of memory currently being used) becomes 30 (Kbytes), the amount of memory that can be used by the subprocessor 43-2 (i.e., MEM_CPU[2] - the amount of memory currently being used) becomes 60 (Kbytes), and the amount of memory that can be used by the subprocessor 43-3 (i.e., MEM_CPU[3] - the amount of memory currently being used) remains 95 (Kbytes).

When it is determined in step S15 that the setting of the processor operation rates need not be changed, or after the processing in step S17, in step S18, the logical-thread execution controller 102 loads a program and data to relevant processors based on the assignment determined, and controls processing of logical threads. The main processor 42 and the subprocessors 43 execute processing of the threads assigned thereto. The procedure is then exited.

When it is determined in step S9 that s > the number of subprocessors 43 provided in the information processing controller 11, in step S19, the logical-thread execution controller 102 sets SET_NG = 1 to notify the user and the information processing apparatus 1 at the source of the request that the assignment of the distributed processing is not allowed. The procedure is then exited.

By the procedure described above, in the information processing apparatus 1 in this embodiment, assignment of distributed processing can be suitably selected so that power consumption of a processor or a set of processors is reduced.

Fig. 14 shows the state where the distributed processing has been assigned by the procedure described above. Power consumption in a case where the processor operation rates are commonly controlled can be expressed by expression (11) below:

$$\Sigma PT = \Sigma(PA \times SYSTEM\_RATE[k] + K \times SCPU\_STAT[k]) \times SCPU\_CK[k]$$
$$= (0.9 \times 4 \times PA + (0.4 + 0.8 + 0.4 + 0.1) \times K) \times 1,000$$
$$= (3.6 \times PA + 1.7 \times K) \times 1,000 \qquad (11)$$

When the processor operation rates are commonly controlled, in the subprocessor 43-3 shown in Fig. 14, the processor operation rate becomes high even through the processor usage rate is low. That is, the assignment is inefficient in terms of power consumption.

Thus, in order to further reduce power consumption, assignment of new distributed processing may be determined based on the relationship between the processor operation rates SCPU_RATE[k] or SYSTEM_RATE and the processor usage rates SCPU_STAT[k] before the assignment of the new distributed processing.

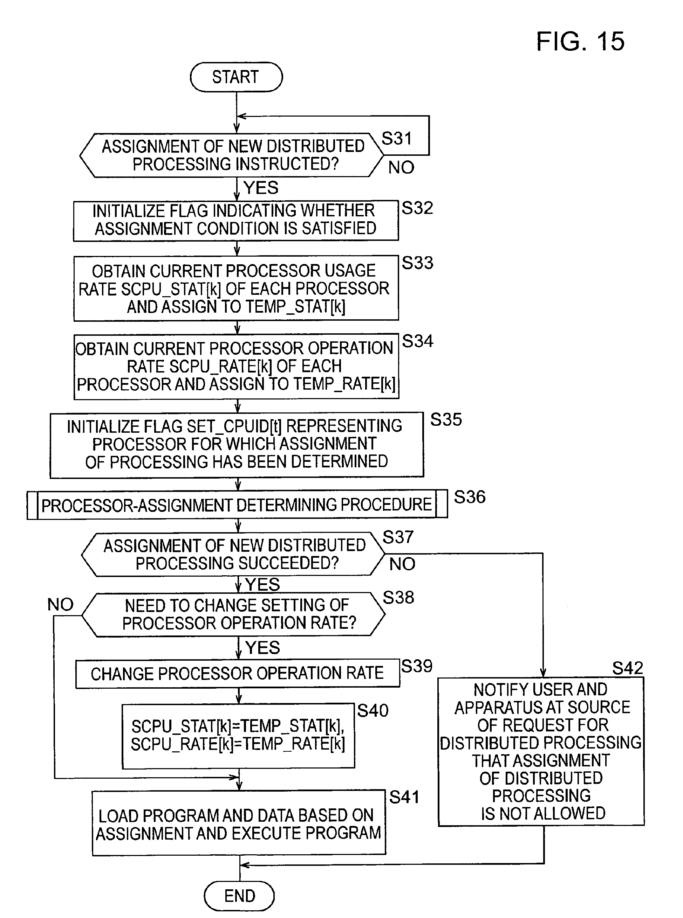

Next, a second distributed-processing assigning procedure, in which assignment of new distributed processing is determined based on the relationship between the processor operation rates and the processor usage rates before the assignment of the new distributed processing, will be described with reference to a flowchart shown in Fig. 15.

In step S31, the logical-thread execution controller 102 receives REQUEST_information from the application execution controller 101, and determines whether assignment of new distributed processing has been instructed. When it is determined in step S31 that assignment of new distributed processing has not been instructed, step S31 is repeated until assignment of new distributed processing has been instructed.

It is assumed herein that in the information processing controller 11 including a plurality of subprocessors 43, the states of the main processor 42 and the subprocessors 43-1 to 43-3 already executing a certain application program are the same as those in the case described with reference to Fig. 13.

That is, since the processor operation rate SYSTEM_RATE is 0.5 and the processor usage rate SCPU_STAT [0] represented by k = 0 is 0.3, the processor usage rate SCPU_STAT[0]/the processor operation rate SYSTEM_RATE [0] is 0.3/0.5. MEM_CPU[0] representing the amount of memory that can be used by the main processor 42 is 5,000 (Kbytes). SCPU_CK[0] representing the maximum operating clock rate of the main processor 42 is 1,000. The processor usage rate SCPU_STAT[1] of the subprocessor 43-1 represented by k = 1 is 0.4, so that the processor usage rate SCPU_STAT[1]/the processor operation rate SYSTEM_RATE[1] is 0.4/0.5. MEM_CPU[1] representing the amount of memory that can be used by the subprocessor 43-1 is 100 (Kbytes). SCPU_CK[1] representing the maximum operating clock rate of the subprocessor 43-1 is 1,000. The processor usage rate SCPU_STAT[2] of the subprocessor 43-2 represented by k = 2 is 0.2, so that the processor usage rate SCPU_STAT[2]/the processor operation rate SYSTEM_RATE [2] is 0.2/0.5. MEM_CPU[2] representing the amount of memory that can be used by the subprocessor 43-2 is 100 (Kbytes). SCPU_CK[2] representing the maximum operating clock rate of the subprocessor 43-2 is 1,000. The processor usage rate SCPU_STAT[3] of the subprocessor 43-3 represented by k = 3 is 0.1, so that the processor usage rate SCPU_STAT[3]/the processor operation rate SYSTEM_RATE[3] is 0.1/0.5. MEM_CPU[3] representing the amount of memory that can be used by the subprocessor 43-3 is 100 (Kbytes). SCPU_CK[3] representing the maximum operating clock rate of the subprocessor 43-3 is 1,000. For simplicity of description, it is assumed that THREAD_OVERHEAD is 0.

The following description will be directed to a case where execution of another application program is newly requested by another information processing apparatus 1 connected via the network 2 in the state described above. Furthermore, it is assumed that values currently managed by the logical-thread execution controller 102 or the operation-information memory 105 are such that REQ_REAL = 1 (real-time processing is required), NUM_CPU = 3, TIME_DEF = 1 (1 second), RATE_MARGIN = 0, and MEM_MARGIN = 10.

The operation conditions of the application program that is to be newly executed according to the request, written in REQUEST_information, are such that REQ_NUM representing the number of subprocessors needed is 2, REQ_PC[0] representing the number of processing cycles required for the main processor 42 is 100, REQ_MEM[0] representing the amount of memory required for the main processor 42 is 100 (Kbytes), REQ_PC[0] representing the number of processing cycles required for the first subprocessor 43 is 400, REQ_MEM[1] representing the amount of memory required for the first subprocessor 43 is 50 (Kbytes), REQ_PC[2] representing the number of processing cycles required for the second subprocessor 43 is 200, and REQ_MEM[2] representing the amount of memory required for the second subprocessor 43 is 30 (Kbytes).

When it is determined in step S31 that assignment of new distributed processing has been instructed, in step S32, the logical-thread execution controller 102 initializes a flag SET_NG indicating whether the assignment condition is satisfied, i.e., SET_NG = 0.

In step S33, the logical-thread execution controller 102 obtains the current processor usage rate SCPU_STAT [k] of each of the processors and assigns it to TEMP_STAT[k].

In step S34, the logical-thread execution controller 102 obtains the current processor operation rate SCPU_RATE[k] of each of the processors and assigns it to TEMP_RATE[k].

In step S35, the logical-thread execution controller 102 initializes a flag SET_CPUID[t] representing a processor for which assignment of processing has been determined, i.e., SET_CPUID[t] = 0.

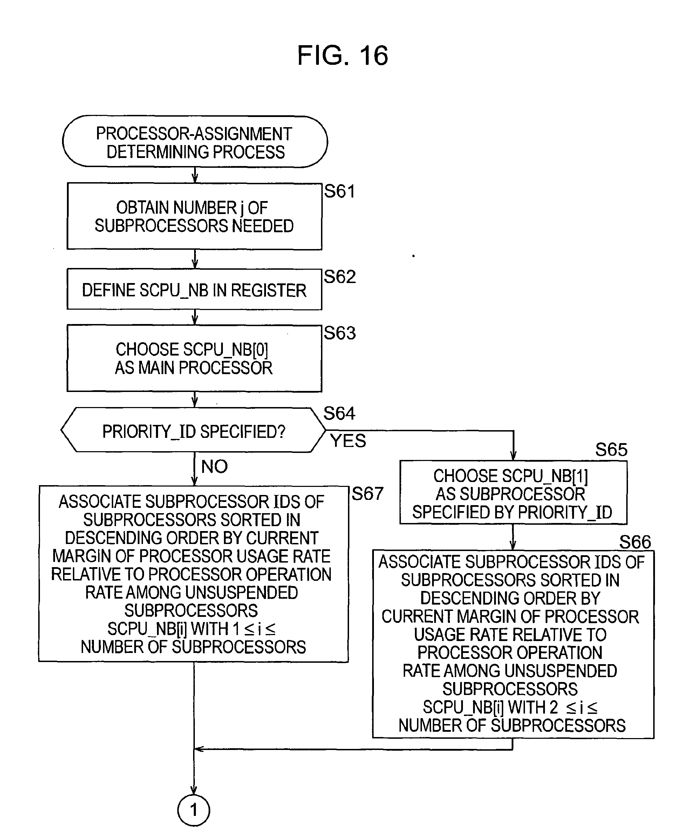

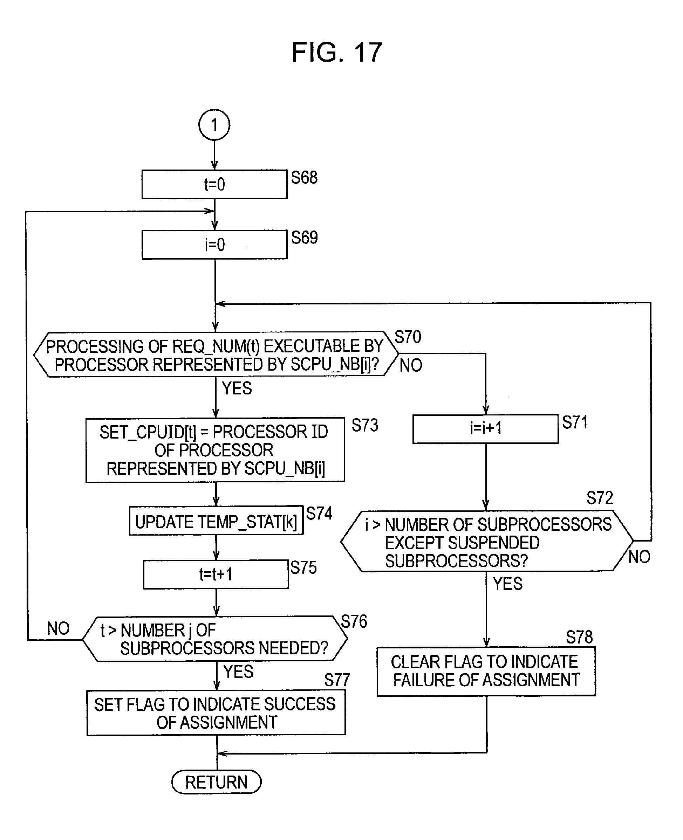

In step S36, a processor-assignment determining procedure described later with reference to flowcharts shown in Figs. 16 and 17 is executed.

In step S37, the logical-thread execution controller 102 determines whether the assignment of the new distributed processing has succeeded based on the value of the flag SET_NG representing the result of the processor-assignment determining procedure described later with reference to the flowcharts shown in Figs. 16 and 17.

When it is determined in step S37 that the assignment of the new distributed processing has succeeded, in step S38, the logical-thread execution controller 102 compares the processor operation rates TEMP_RATE[k] and the current processor usage rates TEMP_STAT[k] of all the processors to determine whether the setting of the processor operation rates needs to be changed due to the assignment of the new distributed processing.

When it is determined in step S38 that the setting of the processor operation rates needs to be changed, i.e., when the processor operation rate TEMP_RATE[k] < the processor usage rate TEMP_STAT[k] for one of the processors, in step S39, the logical-thread execution controller 102 calculates a new processor operation rate and sends it to the operation-rate setting unit 103. The operation-rate setting unit 103 sets the processor operation rate for the relevant one of the main processor 42 and the subprocessors 43.

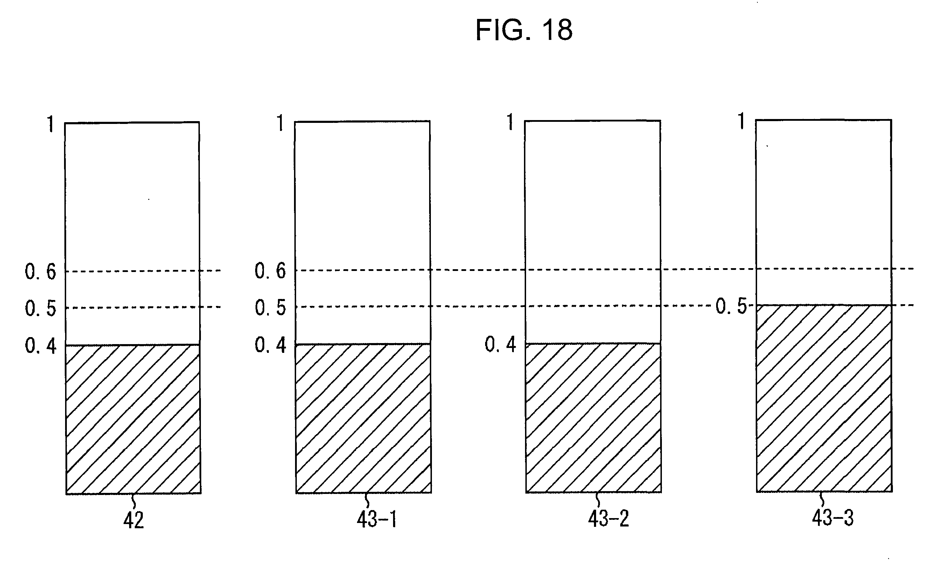

In step S40, the logical-thread execution controller 102 updates the values of the processor usage rate SCPU_STAT[k] and the processor operation rate SCPU_RATE[k] of each of the processors, recorded in the operation-information memory 105, to the values of the processor usage rate TEMP_STAT[k] and the processor operation rate TEMP_RATE[k] obtained by the calculation of assignment. The result of the assignment of the new distributed processing and setting of the operation rates will be described later with reference to Figs. 18 to 20.

When it is determined in step S38 that the setting of the processor operation rates does not need to be changed, or after the processing in step S39, in step S41, the logical-thread execution controller 102 loads a program and data to the relevant processors based on the assignment determined, and controls processing of logical threads. The main processor 42 and the subprocessors 43 execute processing of the threads assigned. The procedure is then exited.

When it is determined in step S37 that the assignment of the distributed processing has not succeeded, in step S42, the logical-thread execution controller 102 notifies the user and the information processing apparatus 1 at the source of the request that the assignment of the distributed processing is not allowed. The procedure is then exited.

By the procedure described above, in the information processing apparatus 1 in this embodiment, compared with the case where the first distributed-processing assigning procedure described with reference to Figs. 11 and 12 is executed, assignment of distributed processing can be determined suitably so that power consumption of a processor or a set of processors is further reduced.

Next, a processor-assignment determining procedure executed in step S36 shown in Fig. 15 will be described with reference to flowcharts shown in Figs. 16 and 17.

In step S61, the logical-thread execution controller 102 obtains the number j of subprocessors needed for executing the distributed processing that is to be assigned according to the request from REQUEST_information fed thereto.

In step S62, the logical-thread execution controller 102 defines SCPU_NB corresponding to a value of an internal register for distinguishing each of the processors in order to determine whether the assignment of the distributed processing is allowed.

In step S63, the logical-thread execution controller 102 chooses SCPU_NB[0] as the main processor 42.

In step S64, based on the information included in REQUEST_information fed thereto, the logical-thread execution controller 102 determines whether PRIORITY_ID is specified for the processing that is to be executed according to the request. When it is determined in step S64 that PRIORITY_ID is not specified, the procedure proceeds to step S67 described later.

When it is determined in step S64 that PRIORITY_ID is specified, in step S65, the logical-thread execution controller 102 chooses SCPU_NB[1] as the subprocessor 43 specified by PRIORITY_ID.

In step S66, the logical-thread execution controller 102, with reference to the information included in REQUEST_information fed thereto, associates the subprocessor IDs of the subprocessors sorted in descending order by the current margin of the processor usage rate SCPU_STAT[k] relative to the processor operation rate SCPU_RATE [k] or SYSTEM_RATE among SCPU_NB[i] with $2 \leq i \leq$ the number of the subprocessors 43 included in the information processing controller 11, except for suspended subprocessors 43. The procedure then proceeds to step S68 described later.

When it is determined in step S64 that PRIORITY_ID is not specified, in step S67, the logical-thread execution controller 102, with reference to the information included in REQUEST_information fed thereto, associates the subprocessor IDs of the subprocessors sorted in descending order by the current margin of the processor usage rate SCPU_STAT [k] relative to the processor operation rate SCPU_RATE[k] or SYSTEM_RATE among SCPU_NB[i] with $1 \leq i \leq$ the number of the subprocessors 43 included in the information processing controller 11, except for suspended subprocessors 43.

That is, by the processing in steps S63 to S67, the main processor 42 is associated with SCPU_NB[0], and when PRIORITY_ID is specified for SCPU_NB[1], SCPU_NB[2], SCPU_NB[3], ... or SCPU_NB[k], priority is given to the specified subprocessor 43, and the subprocessors 43 sorted in descending order by the current margin of the processor usage rage SCPU_STAT[k] relative to the processor operation rate SCPU_RATE[k] or SYSTEM_RATE, except for suspended subprocessors 43, are sequentially associated.

That is, in the case described with reference to Fig. 13, when PRIORITY_ID or suspending is not specified, the main processor 42 is associated with SCPU_NB[0], the subprocessor 43-3 is associated with SCPU_NB[1], the subprocessor 43-2 is associated with SCPU_NB[2], and the subprocessor 43-1 is associated with SCPU_NB[3].

After the processing in step S66 or step S67, in step S68, the logical-thread execution controller 102 sets t = 0, where t is a register value representing for which processor assignment is being determined among REQ_NUM representing the number of processors needed for executing processing according to the request. The processor represented by t = 0 is the main processor 42, and a processor with $t \geq 1$ represents one of the subprocessors 43.

In step S69, the logical-thread execution controller 102 sets i = 0, where i is a variable in SCPU_NB[i].

In step S70, the logical-thread execution controller 102, with reference to the information included in REQUEST_information, determines whether the processing of REQ_NUM(t) that is to be assigned in a distributed manner to one of the subprocessors 43 according to the request is executable by the processor 43 represented by SCPU_NB[i].

More specifically, the logical-thread execution controller 102 adds an increase in the processor usage rate SCPU_STAT[k] of the processor represented by SCPU_NB[i] due to the processing of REQ_NUM(t), and then determines whether the processing of REQ_NUM(t) is executable by the processor represented by SCPU_NB[i] based on whether the processor usage rage SCPU_STAT[k] + RATE_MARGIN exceeds 1 and whether the amount of memory required by the processor represented by SCPU_NB[i] for the processing of REQ_NUM(t) satisfies (REQ_MEM[k] + MEM_MARGIN) < (MEM_CPU[k] - the amount of memory currently being used).

When it is determined in step S70 that the processing of REQ_NUM(t) is not executable by the processor represented by SCPU_NB[i], in step S71, the logical-thread execution controller 102 increments the variable i in SCPU_NB[i] so that i = i + 1.

In step S72, the logical-thread execution controller 102 determines whether i > (the number of subprocessors 43 to which processing can be effectively assigned, except for suspended subprocessors 43 or the like). When it is not determined in step S72 that i > (the number of subprocessors 43 to which processing can be effectively assigned, except for suspended subprocessors 43 or the like), the procedure returns to step S70, and subsequent steps are repeated. When it is determined in step S72 that i > (the number of subprocessors 43 to which processing can be effectively assigned, except for suspended subprocessors 43 or the like), the procedure proceeds to step S78 described later.

When it is determined that the processing of REQ_NUM(t) is executable by the processor represented by SCPU_NB[i], in step S73, the logical-thread execution controller 102 sets the processor ID of the processor represented by SCPU_NB[i] as the register value SET_CPUID[t] representing a processor for which assignment of processing has been determined.

In step S74, the logical-thread execution controller 102 updates TEMP_STAT[k] of the processor represented by SCPU_NB[i] by adding a processor usage rate corresponding to the newly assigned processing.

In step S75, the logical-thread execution controller 102 sets t = t + 1, where t is the register value representing for which processor assignment of processing is currently being determined.

That is, when distributed processing for which REQ_NUM representing the number of subprocessors needed is 2, REQ_PC[0] representing the number of processing cycles required for the main processor 42 is 100, and REQ_MEM[0] representing the amount of memory required for the main processor 42 is 100 (Kbytes), is requested to the main processor 42 and the subprocessors 43-1 to 43-3 in the same state as described with reference to Fig. 13, with i = 0, when new distributed processing is assigned to the main processor 42, as expressed in expression (12) below, the processor usage rate SCPU_STAT[0] + RATE_MARGIN does not exceed 1, and as expressed in expression (13) below, (REQ_MEM[0] + MEM_MARGIN) < (MEM_CPU[0] - the amount of memory currently being used) is satisfied. Thus, the logical-thread execution controller 102 determines that the processing of REQ_NUM(0) is executable by the main processor 42 represented by SCPU_NB[0].

$$\text{TEMP\_STAT[0] (after assignment)}$$
$$= \text{(REQ\_PC[0] / TIME\_DEF) / SCPU\_CK[0] + TEMP\_STAT[0]}$$
$$\text{(before assignment) + RATE\_MARGIN}$$
$$= \text{(100 / 1) / 1,000 + 0.3 + 0.1}$$
$$= 0.5 \qquad (12)$$

$$\text{MEM\_CPU[0] - the amount of memory currently being used}$$
$$\text{- MEM\_MARGIN (= 4,890) > REQ\_MEM[0] (= 100)} \qquad (13)$$

Thus, the logical-thread execution controller 102 writes the processor ID of the main processor 42 to SET_CPUID[0], sets TEMP_STAT[0] = 0.4, updates the amount of memory currently being used so that 1,000 + 100 = 1,100, and sets t = 1 where t is a register value representing for which processor assignment is being determined.

In step S76, the logical-thread execution controller 102 determines whether t > j (where j is the number of subprocessors needed for assigning new processing). When it is not determined in step S76 that t > j, the procedure returns to step S69, and subsequent steps are repeated.

For example, when t = 1, it is not determined that t > j. Thus, similarly to the case described above, when REQ_NUM representing the number of subprocessors needed is 2, REQ_PC[1] representing the number of processing cycles required for the first subprocessor 43 is 400, and REQ_MEM[1] representing the amount of memory required for the first subprocessor 43 is 50 (Kbytes), with i = 1, for the subprocessor 43-3 represented by SCPU_NB[1], as expressed in expression (14) below, the processor usage rate SCPU_STAT[3] + RATE_MARGIN does not exceed 1, and as expressed in expression (15) below, (REQ_MEM[1] + MEM_MARGIN) < (MEM_CPU[3] - the amount of memory currently being used) is satisfied. Thus, the logical-thread execution controller 102 determines that the processing of REQ_NUM (1) is executable by the subprocessor 43-3 represented by SCPU_NB[1].

```
TEMP_STAT[3] (after assignment)

= (REQ_PC[1] / TIME_DEF) / SCPU_CK[3] + TEMP_STAT[3]

(before assignment) + RATE_MARGIN

= (400 / 1) / 1,000 + 0.1 + 0.1

= 0.6      (14)


MEM_CPU[3] - the amount of memory currently being used

- MEM_MARGIN (= 85) > REQ_MEM[1] (= 50)     (15)
```

Thus, the logical-thread execution controller 102 writes the processor ID of the subprocessor 43-3 to SET_CPUID[1], sets TEMP_STAT[1] = 0.5, updates the amount of memory currently being used to 55 (Kbytes), and sets t = 2 where t is a register value representing for which processor assignment is being determined.

Similarly, when REQ_PC[2] representing the number of processing cycles required for the second subprocessor 43 is 200, and REQ_MEM[2] representing the amount of memory required for the second subprocessor 43 is 30 (Kbytes), with i = 2, for the subprocessor 43-2 represented by SCPU_NB[2], as expressed in expression (16) below, the processor usage rate SCPU_STAT[2] + RATE_MARGIN does not exceed 1, and as expressed in expression (17) below, (REQ_MEM[2] + MEM_MARGIN) < (MEM_CPU[2] - the amount of memory currently being used) is satisfied. Thus, the logical-thread execution controller 102 determines that the processing of REQ_NUM(2) is executable by the subprocessor 43-2 represented by SCPU_NB[2].

```
TEMP_STAT[2] (after assignment)

= (REQ_PC[2] / TIME_DEF) / SCPU_CK[2] + TEMP_STAT[2]

(before assignment) + RATE_MARGIN

= (200 / 1) / 1,000 + 0.2 + 0.1

= 0.5     (16)


MEM_CPU[2] - the amount of memory currently being used

- MEM_MARGIN (= 80) > REQ_MEM[2] (= 30)     (17)
```

Thus, the logical-thread execution controller 102 writes the processor ID of the subprocessor 43-2 to SET_CPUID[2], sets TEMP_STAT[2] = 0.4, updates the amount of memory currently being used to 40 (Kbytes), and sets t = 3 where t is a register value representing for which processor assignment is being determined.

When it is determined in step S76 that t > j, in step S77, the logical-thread execution controller 102 sets a flag indicating the success of the assignment, i.e., SET_NG = 0. The procedure then returns to step S36 shown in Fig. 15, and proceeds to step S37.

When it is determined in step S72 that i > (the number of subprocessors 43 to which processing can be assigned effectively, except for suspended subprocessors 43 or the like), in step S78, the logical-thread execution controller 102 turns off the flag to indicate the failure of the assignment, i.e., SET_NG = 1. The procedure then returns to step S36 shown in Fig. 15, and proceeds to step S37.

By the procedure described above, in the information processing apparatus 1 according to this embodiment, compared with the case where the first distributed-processing assigning procedure described with reference to Figs. 11 and 12 is executed, assignment of distributed processing can be determined appropriately so that power consumption of a processor or a set of processors can be further reduced.

Fig. 18 shows the result of assignment in a case where the processor operation rate SYSTEM_RATE is commonly controlled among the main processor 42 and the subprocessors 43-1 to 43-3 in the same state as described with reference to Fig. 13.

The processor usage rate SCPU_STAT[0] of the main processor 42 represented by k = 0 becomes 0.4. The processor usage rate SCPU_STAT[1] of the subprocessor 43-1 represented by k = 1 remains 0.4. The processor usage rate SCPU_STAT[2] of the subprocessor 43-2 represented by k = 2 becomes 0.4. The processor usage rate SCPU_STAT[3] of the subprocessor 43-3 represented by k = 3 becomes 0.5. Since RATE_MARGIN is 0.1, the processor operation rate SYSTEM_RATE is controlled to be 0.6.

Fig. 18 shows the state where the distributed processing has been assigned by the procedure described above. Power consumption in a case where the processor operation rates are commonly controlled can be calculated by expression (18) below:

$$
\begin{aligned}
\Sigma PT &= (PA \times SYSTEM\_RATE + K \times SCPU\_STAT[k]) \times SCPU\_CK[k] \\
&= (0.6 \times 4 \times PA + (0.4 + 0.4 + 0.4 + 0.5) \times K) \times 1,000 \\
&= (2.4 \times PA + 1.7 \times K) \times 1,000 \qquad (18)
\end{aligned}
$$

That is, compared with the assignment procedure described with reference to Fig. 14, power consumption is reduced by 1,200 × PA.

Fig. 18 shows the result of assignment in a case where the processor operation rate SYSTEM_RATE is commonly controlled. However, the procedures described with reference to flowcharts shown in Figs. 15 to 17 are particularly effective to reduce power consumption when the processor operation rates SCPU_RATE[k] are individually set.

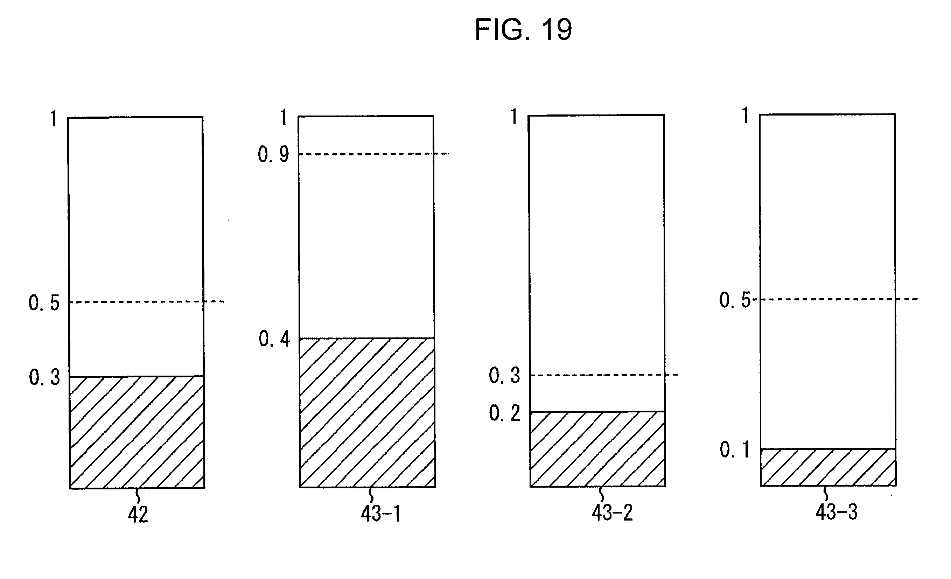

As an example, a case will be considered where the relationship between the processor operation rates SCPU_RATE[k] and the processor usage rates SCPU_STAT[k] of the main processor 42 and the subprocessors 43-1 to 43-3 already executing a certain application program is such that, as shown in Fig. 19, the processor usage rate SCPU_STAT[0] of the main processor 42 represented by k = 0 is 0.3, the processor usage rate SCPU_STAT[0]/the processor operation rate SCPU_RATE[0] is 0.3/0.5, the processor usage rate SCPU_STAT[1] of the subprocessor 43-1 represented by k = 1 is 0.4, the processor usage rate SCPU_STAT[1]/the processor operation rate SCPU_RATE[1] is 0.4/0.9, the processor usage rate SCPU_STAT[2] of the subprocessor 43-2 represented by k = 2 is 0.2, the processor usage rate SCPU_STAT[2]/the processor operation rate SCPU_RATE[2] is 0.2/0.3, the processor usage rate SCPU_STAT[3] of the subprocessor 43-3 represented by k = 3 is 0.1, and the processor usage rate SCPU_STAT[3]/the processor operation rate SCPU_RATE[3] is 0.1/0.5. Similarly to the case described above, assignment of distributed processing requested is considered for a case where the operating conditions of an application program that is to be newly requested according to the request, written in REQUEST_information are such that REQ_NUM representing the number of subprocessors needed is 2, REQ_PC[0] representing the number of processing cycles required for the main processor 42 is 100, REQ_PC[1] representing the number of processing cycles required for the first subprocessor 43 is 400, and REQ_PC[2] representing the number of processing cycles required for the second subprocessor 43 is 200.

The assignment of the processing for the main processor 42 represented by SCPU_NB[0] is the same as that in the case described in relation to expression (12). However, the subprocessor 43-1 having the largest current margin of the processor usage rate SCPU_STAT[k] relative to the processor operation rate SCPU_RATE[k] or SYSTEM_RATE is assigned to SCPU_NB[1], and the subprocessor 43-3 having the next largest current margin of the processor usage rate SCPU_STAT[k] relative to the processor operation rate SCPU_RATE[k] or SYSTEM_RATE is assigned to SCPU_NB[2]. That is, processing of REQ_NUM(1) is assigned to the subprocessor 43-1 corresponding to SCPU_NB[1], and processing of REQ_NUM(2) is assigned to the subprocessor 43-3 corresponding to SCPU_NB[2].

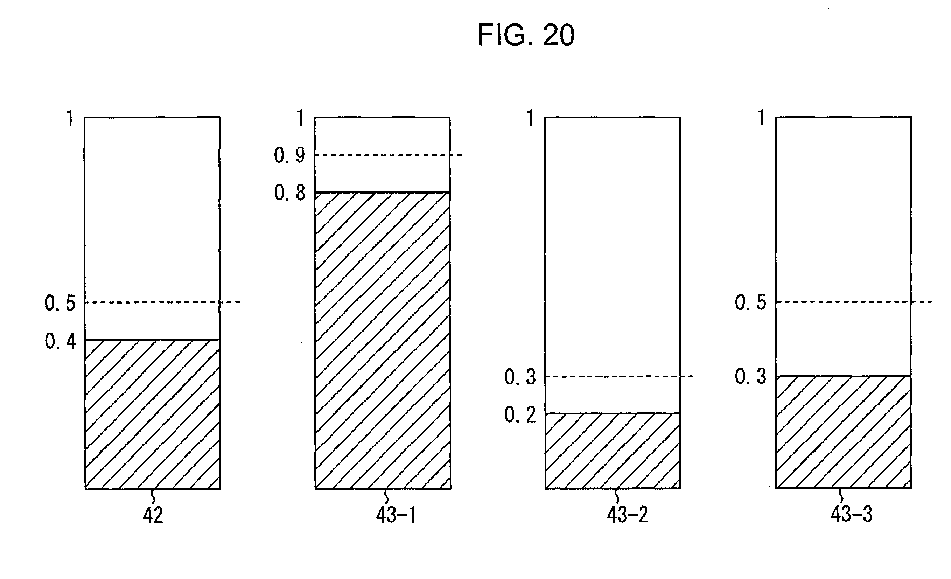

Thus, as shown in Fig. 20, the result of the assignment is such that the processor usage rate SCPU_STAT[0] of the main processor 42 represented by k = 0 becomes 0.4, the processor usage rate SCPU_STAT[1] of the subprocessor 43-1 represented by k = 1 becomes 0.8, the processor usage rate SCPU_STAT[2] of the subprocessor 43-2 represented by k = 2 remains 0.2, and the processor usage rate SCPU_STAT[3] of the subprocessor 43-3 represented by k = 3 becomes 0.3. Since RATE_MARGIN is 0.1, the processor operation rates SCPU_RATE[i] need not be changed from the state before the assignment of processing described with reference to Fig. 19. Thus, increase in power consumption due to the assignment of the new processing can be suppressed considerably.

As for a logical thread corresponding to an application for which REQ_REAL is set to 0 (i.e., real-time processing is not required), scheduling is executed so that the priority of a task for executing the application becomes lower than that of a task requiring real-time processing, executing the low-priority task in the remaining period. For example, regarding a logical thread relating to an application for which REQ_REAL is set to 0 (i.e., real-time processing is not required), the following method may be used. Assignment is first executed by the conditions that are the same as the conditions for a logical thread requiring real-time processing. When the assignment fails, the number of processing cycles required for the processing is changed to 1/M (i.e., the predefined time is multiplied by M), and assignment is executed again.

By the processing described above, the information processing apparatus can provide requested functions while reducing power consumption. Particularly in consumer electronics (CE) apparatuses, reduction is power consumption is a considerable strength for the competitiveness of the products. Thus, the advantages of this embodiment are significant.

The series of processing described above may be executed by software. Programs of the software are installed from a recording medium to a computer embedded in special hardware, or to a general-purpose personal computer that is capable of executing various functions with various programs installed thereon.

As shown in Fig. 1, the recording medium is, for example, a package medium that is distributed for providing programs to a user separately from a computer; such as a magnetic disk 61 (e.g., a flexible disk), an optical disk 62 (e.g., a compact disk-read only memory (CD-ROM) or a digital versatile disk (DVD)), a magneto-optical disk 63 (e.g., a mini-disk (MD)®), or a semiconductor memory 64.

Steps of the programs recorded on the recording medium need not necessarily be executed in the orders described in this specification, and may be executed in parallel or individually.

In this specification, a system refers to the entirety of a plurality of apparatuses.

It should be understood by those skilled in the art that various modifications, combinations, sub-combinations and alterations may occur depending on design requirements and other factors insofar as they are within the scope of the appended claims or the equivalents thereof.

CROSS REFERENCES TO RELATED APPLICATIONS

The present invention contains subject matter related to Japanese Patent Application JP 2004-211420 filed in the Japanese Patent Office on July 20, 2004.

Various respective aspects and features of the invention are defined in the appended claims. Features from the dependent claims may be combined with features of the independent claims as appropriate and not merely as explicitly set out in the claims.

**Claims**

1. An information processing apparatus comprising:

> a first processor; and
> a plurality of second processors;
> wherein the first processor includes

>> application-program execution controlling means for controlling execution of an application program,
>> operation-information obtaining means for obtaining operation information regarding operation of the plurality of second processors,
>> distributed-processing controlling means for controlling distributed processing when the execution of the application program is controlled by the application-program execution controlling means, the distributed processing assigning processing to the plurality of second processors so that a plurality of processing jobs relating to the execution of the application program is integrated as a processing unit that provides a single function and so that the function corresponding to the processing unit is provided, and

**EP 1 630 672 A2**

clock-rate-ratio setting means for setting clock-rate ratios of current operating clock rates relative to maximum operating clock rates at which the plurality of second processors is capable of operating,

wherein the operation information includes the maximum operating clock rates, the current operating clock rates, and the numbers of cycles required in a predefined time for the processing assigned to the plurality of second processors, and

wherein the distributed-processing controlling means controls the distributed processing corresponding to the processing unit based on the operation information.

2. The information processing apparatus according to Claim 1,
wherein the clock-rate-ratio setting means sets the clock-rate ratios so that the clock-rate ratios are a common value among all the plurality of second processors.

3. The information processing apparatus according to Claim 1,
wherein the clock-rate-ratio setting means sets the clock-rate ratios independently among the plurality of second processors.

4. The information processing apparatus according to Claim 1,
wherein the distributed-processing controlling means calculates processor usage rates based on the current operating clock rates and the number of cycles required in the predefined time for the processing assigned to the plurality of second processors, and exercises control so that priority is given to second processors whose ratios of the processor usage rates to the clock-rate ratios are lower in assigning the distributed processing corresponding to the processing unit.

5. The information processing apparatus according to Claim 4,
wherein the clock-rate-ratio setting means updates the clock-rate ratios based on the processor usage rates.

6. An information processing method for an information processing apparatus including a first processor and a plurality of second processors, the information processing method comprising the steps of:

requesting start of distributed processing in which processing is assigned to the plurality of second processors by the first processor controlling execution of an application program so that a plurality of processing jobs assigned to the plurality of second processors is integrated as a processing unit that provides a single function and so that the function corresponding to the processing unit is provided;

obtaining operation information regarding operation of the plurality of second processors, the operation information including maximum operating clock rates at which the plurality of second processors is capable of operating, current operating clock rates of the plurality of second processors, and the number of cycles required in a predefined time for the processing assigned to the plurality of second processors;

controlling assignment of the distributed processing corresponding to the processing unit based on the operation information regarding the operation of the plurality of second processors; and

setting clock-rate ratios of the current operating clock rates relative to the maximum operating clock rates at which the plurality of second processors is capable of operating.

7. A program that allows a computer to execute processing for controlling distributed processing using a first processor and a plurality of second processors, the processing comprising the steps of:

requesting start of distributed processing in which processing is assigned to the plurality of second processors by the first processor controlling execution of an application program so that a plurality of processing jobs assigned to the plurality of second processors is integrated as a processing unit that provides a single function and so that the function corresponding to the processing unit is provided;

obtaining operation information regarding operation of the plurality of second processors, the operation information including maximum operating clock rates at which the plurality of second processors is capable of operating, current operating clock rates of the plurality of second processors, and the number of cycles required in a predefined time for the processing assigned to the plurality of second processors;

controlling assignment of the distributed processing corresponding to the processing unit based on the operation information regarding the operation of the plurality of second processors; and

setting clock-rate ratios of the current operating clock rates relative to the maximum operating clock rates at which the plurality of second processors is capable of operating.

23

8. An information processing apparatus comprising:

a first processor; and
a plurality of second processors;
wherein the first processor includes

an application-program execution controller configured to control execution of an application program,
an operation-information obtaining unit configured to obtain operation information regarding operation of the plurality of second processors,
a distributed-processing controller configured to control distributed processing when the execution of the application program is controlled by the application-program execution controller, the distributed processing assigning processing to the plurality of second processors so that a plurality of processing jobs relating to the execution of the application program is integrated as a processing unit that provides a single function and so that the function corresponding to the processing unit is provided, and
a clock-rate-ratio setting unit configured to set clock-rate ratios of current operating clock rates relative to maximum operating clock rates at which the plurality of second processors is capable of operating,

wherein the operation information includes the maximum operating clock rates, the current operating clock rates, and the numbers of cycles required in a predefined time for the processing assigned to the plurality of second processors, and
wherein the distributed-processing controller controls the distributed processing corresponding to the processing unit based on the operation information.

FIG. 1

1-1

INFORMATION PROCESSING APPARATUS

INFORMATION PROCESSING CONTROLLER ~11

| MAIN PROCESSOR | ~42 |
| LOCAL STORAGE | ~51-1 |

45

~41

KEY-MANAGEMENT-TABLE RECORDING UNIT

44

DMAC

46

DC

43-1

| SUBPROCESSOR |
| LOCAL STORAGE | ~51-2 |

43-2

| SUBPROCESSOR |
| LOCAL STORAGE | ~51-3 |

⋮

43-m

| SUBPROCESSOR |
| LOCAL STORAGE | ~51-(m+1) |

~14

POWER SUPPLY UNIT ~19

12

MAIN MEMORY

RECORDING UNIT ~13-1

RECORDING UNIT ~13-2

18

DRIVE □~64
◎~63
◎~62
◎~61

OPERATION INPUT UNIT ~15

DISPLAY ~17

COMMUNI-CATION UNIT ~16

NETWORK ~2

| INFORMATION PROCESSING APPARATUS | INFORMATION PROCESSING APPARATUS | · · · | INFORMATION PROCESSING APPARATUS |
| ~1-2 | ~1-3 | | ~1-n |

# FIG. 2

| ADDITIONAL SEGMENT 0 | ACCESS KEY 0 | MEMORY LOCATION 0 |
|---|---|---|
| ADDITIONAL SEGMENT 1 | ACCESS KEY 1 | MEMORY LOCATION 1 |
| ADDITIONAL SEGMENT 2 | ACCESS KEY 2 | MEMORY LOCATION 2 |
| ⋮ | ⋮ | ⋮ |
| ADDITIONAL SEGMENT M | ACCESS KEY M | MEMORY LOCATION M |

MAIN MEMORY — 12

SANDBOX

SANDBOX

| F/E BIT | SUBPROCESSOR ID | LS ADDRESS |
|---|---|---|

EP 1 630 672 A2

# FIG. 3

11

INFORMATION PROCESSING CONTROLLER

43-1

SUBPROCESSOR

| ADDITIONAL SEGMENT 0 | MEMORY LOCATION 0 |
|---|---|
| ADDITIONAL SEGMENT 1 | MEMORY LOCATION 1 |
| ADDITIONAL SEGMENT 2 | MEMORY LOCATION 2 |
| ⋮ | ⋮ |
| ADDITIONAL SEGMENT L | MEMORY LOCATION L |

51

43-2

SUBPROCESSOR

43-3

SUBPROCESSOR

# FIG. 4

KEY-MANAGEMENT TABLE

| SUBPROCESSOR ID | | |
|---|---|---|
| 0 | SUBPROCESSOR KEY 0 | KEY MASK 0 |
| 1 | SUBPROCESSOR KEY 1 | KEY MASK 1 |
| 2 | SUBPROCESSOR KEY 2 | KEY MASK 2 |
| ⋮ | ⋮ | ⋮ |
| N | SUBPROCESSOR KEY N | KEY MASK N |

# FIG. 5

SOFTWARE CELL

| |
|---|
| SOURCE ID |
| DESTINATION ID |
| RECIPIENT ID |
| CELL INTERFACE |
| DMA COMMAND |
| PROGRAM (SUBPROCESSOR PROGRAM) |
| DATA |

EXECUTION SECTION

| |
|---|
| GLOBAL ID |
| INFORMATION OF SUBPROCESSORS NEEDED |
| SANDBOX SIZE |
| PREVIOUS SOFTWARE-CELL ID |

| |
|---|
| LOAD COMMAND |
| MAIN-MEMORY ADDRESS |
| SUBPROCESSOR ID |
| LS ADDRESS |

| |
|---|
| KICK COMMAND |
| SUBPROCESSOR ID |
| PROGRAM COUNTER |

| |
|---|
| STATUS REQUESTING COMMAND |

| |
|---|
| STATUS RETURNING COMMAND |

| |
|---|
| FUNCTIONAL-PROGRAM EXECUTING COMMAND |
| FUNCTIONAL-PROGRAM ID |

EP 1 630 672 A2

# FIG. 6

| STATUS RETURNING COMMAND |
|---|

| DATA |
|---|

| ID OF INFORMATION PROCESSING APPARATUS |
|---|
| TYPE ID OF INFORMATION PROCESSING APPARATUS |
| MS STATUS |
| OPERATING FREQUENCY OF MAIN PROCESSOR |
| USAGE RATE OF MAIN PROCESSOR |
| NUMBER OF SUBPROCESSORS |
| SUBPROCESSOR ID |
| SUBPROCESSOR STATUS |
| USAGE RATE OF SUBPROCESSORS |
| TOTAL CAPACITY OF MAIN MEMORY |
| AMOUNT OF MAIN MEMORY IN USE |
| NUMBER OF RECORDING UNITS |
| ID OF RECORDING UNIT |
| TYPE ID OF RECORDING UNIT |
| TOTAL CAPACITY OF RECORDING UNIT |
| AMOUNT OF RECORDING UNIT IN USE |

MS STATUS ----- { 0: MASTER
1: SLAVE

SUBPROCESSOR STATUS ----- FOR EACH SUBPROCESSOR { UNUSED
RESERVED
BUSY

EP 1 630 672 A2

# FIG. 7

| APPLICATION PROGRAMS | ~87 |

| SYSTEM SERVICE/FRAMEWORK | ~86 |

~83

84~ | LIBRARY | DEVICE DRIVERS | POWER MANAGER | ~85 |

| KERNEL (OS) | ~82 |

| DRIVER | DRIVER | DRIVER | · · · | DRIVER |
| 81-1 | 81-2 | 81-3 | | 81-P |

EP 1 630 672 A2

# FIG. 8

# FIG. 9

| ID | REQ_REAL | PRIORITY_ID | REQ_NUM | REQ_MEMO | REQ_PC0 | REQ_MEM1 | REQ_PC1 |
|---|---|---|---|---|---|---|---|
| 16 BYTES | 1 BYTE | 1 BYTE | 2 BYTES | 4 BYTES | 8 BYTES | 4 BYTES | 8 BYTES |

| REQ_MEM$_M$ | REQ_PC$_M$ | Check sum |
|---|---|---|
| 4 BYTES | 8 BYTES | 4 BYTES |

EP 1 630 672 A2

# FIG. 10

PT(POWER CONSUMPTION)

Pmax

$K \times SCPU\_CK$

$K \times SCPU\_STAT \times SCPU\_CK$

$PA \times SCPU\_RATE \times SCPU\_CK$

$PA \times SCPU\_CK$

0

OPERATING CLOCK RATE

0

Clock max
(MAXIMUM OPERATING CLOCK RATE)

EP 1 630 672 A2

FIG. 11

START

ASSIGNMENT OF NEW DISTRIBUTED
PROCESSING INSTRUCTED? — S1
NO

↓YES

OBTAIN NUMBER j OF SUBPROCESSORS NEEDED | S2

DEFINE IN REGISTER PROCESSOR
USAGE RATE TEMP_STAT[k] AND
PROCESSOR OPERATION RATE TEMP_RATE[k] | S3

OBTAIN CURRENT PROCESSOR USAGE RATE
SCPU_STAT[k] AND CURRENT PROCESSOR
OPERATION RATE SCPU_RATE[k] OF
EACH PROCESSOR AND
ASSIGN TO TEMP_STAT[k] AND TEMP_RATE[k] | S4

t=0 | S5

s=0 | S6

PROCESSING OF REQ_NUM(t)
EXECUTABLE BY s-TH PROCESSOR? — S7
NO

↓YES

s=s+1 | S8

SET_CPUID[t] = PROCESSOR
ID OF s-TH
PROCESSOR | S10

s > NUMBER OF
SUBPROCESSORS? — S9
NO

↓YES

①

UPDATE TEMP_STAT[s] | S11

t=t+1 | S12

t > NUMBER j OF SUBPROCESSORS NEEDED? — S13
NO

↓YES

②

35

# FIG. 12

② ①

SET FLAG INDICATING
SUCCESS OF
ASSIGNMENT — S14

NO — NEED TO CHANGE SETTING OF
PROCESSOR OPERATION RATE? — S15

YES

CHANGE PROCESSOR OPERATION RATE — S16

SCPU_STAT[k]=TEMP_STAT[k],
SCPU_RATE[k]=TEMP_RATE[k] — S17

NOTIFY USER AND APPARATUS
AT SOURCE OF REQUEST FOR
DISTRIBUTED PROCESSING
THAT ASSIGNMENT OF
DISTRIBUTED PROCESSING
IS NOT ALLOWED — S19

LOAD PROGRAM AND
DATA BASED
ON ASSIGNMENT AND
EXECUTE PROGRAM — S18

END

# FIG. 13

EP 1 630 672 A2

FIG. 14

FIG. 15

```
                    ┌─────────┐
                    │  START  │
                    └────┬────┘
                         ↓
        ╱ASSIGNMENT OF NEW DISTRIBUTED╲ S31
        ╲   PROCESSING INSTRUCTED?    ╱ NO
                      │YES
        ┌───────────────────────────────┐ S32
        │ INITIALIZE FLAG INDICATING    │
        │ WHETHER ASSIGNMENT CONDITION  │
        │ IS SATISFIED                  │
        └───────────────┬───────────────┘
        ┌───────────────────────────────┐ S33
        │ OBTAIN CURRENT PROCESSOR      │
        │ USAGE RATE SCPU_STAT[k] OF    │
        │ EACH PROCESSOR AND ASSIGN     │
        │ TO TEMP_STAT[k]               │
        └───────────────┬───────────────┘
        ┌───────────────────────────────┐ S34
        │ OBTAIN CURRENT PROCESSOR      │
        │ OPERATION RATE SCPU_RATE[k]   │
        │ OF EACH PROCESSOR AND ASSIGN  │
        │ TO TEMP_RATE[k]               │
        └───────────────┬───────────────┘
        ┌───────────────────────────────┐ S35
        │ INITIALIZE FLAG SET_CPUID[t]  │
        │ REPRESENTING PROCESSOR FOR    │
        │ WHICH ASSIGNMENT OF           │
        │ PROCESSING HAS BEEN DETERMINED│
        └───────────────┬───────────────┘
   ┌────────────────────────────────────────┐ S36
   │PROCESSOR-ASSIGNMENT DETERMINING PROCEDURE│
   └────────────────────┬─────────────────────┘
        ╱ASSIGNMENT OF NEW DISTRIBUTED╲ S37
        ╲  PROCESSING SUCCEEDED?      ╱ NO
                      │YES
   NO ╱    NEED TO CHANGE SETTING OF ╲ S38
      ╲    PROCESSOR OPERATION RATE? ╱
                      │YES
        ┌───────────────────────────────┐ S39
        │ CHANGE PROCESSOR OPERATION    │
        │ RATE                          │
        └───────────────┬───────────────┘
        ┌───────────────────────────────┐ S40
        │ SCPU_STAT[k]=TEMP_STAT[k],    │
        │ SCPU_RATE[k]=TEMP_RATE[k]     │
        └───────────────┬───────────────┘
```

S42
NOTIFY USER AND APPARATUS AT SOURCE OF REQUEST FOR DISTRIBUTED PROCESSING THAT ASSIGNMENT OF DISTRIBUTED PROCESSING IS NOT ALLOWED

S41
LOAD PROGRAM AND DATA BASED ON ASSIGNMENT AND EXECUTE PROGRAM

END

# FIG. 16

PROCESSOR-ASSIGNMENT
DETERMINING PROCESS

OBTAIN NUMBER j OF
SUBPROCESSORS NEEDED — S61

DEFINE SCPU_NB IN REGISTER — S62

CHOOSE SCPU_NB[0]
AS MAIN PROCESSOR — S63

PRIORITY_ID SPECIFIED? — S64

**YES**

CHOOSE SCPU_NB[1]
AS SUBPROCESSOR
SPECIFIED BY PRIORITY_ID — S65

ASSOCIATE SUBPROCESSOR IDS OF
SUBPROCESSORS SORTED IN
DESCENDING ORDER BY
CURRENT MARGIN OF PROCESSOR
USAGE RATE RELATIVE TO
PROCESSOR OPERATION
RATE AMONG UNSUSPENDED
SUBPROCESSORS
SCPU_NB[i] WITH $2 \leq i \leq$
NUMBER OF SUBPROCESSORS — S66

**NO**

ASSOCIATE SUBPROCESSOR IDS OF
SUBPROCESSORS SORTED IN
DESCENDING ORDER BY CURRENT
MARGIN OF PROCESSOR USAGE RATE
RELATIVE TO PROCESSOR OPERATION
RATE AMONG UNSUSPENDED
SUBPROCESSORS
SCPU_NB[i] WITH $1 \leq i \leq$
NUMBER OF SUBPROCESSORS — S67

( 1 )

## FIG. 17

```
                    ( 1 )
                      |
        +-------------------------+
        |          t=0            | S68
        +-------------------------+
                      |
        +-------------------------+
        |          i=0            | S69
        +-------------------------+
                      |
    < PROCESSING OF REQ_NUM(t) EXECUTABLE BY \  S70
    <  PROCESSOR REPRESENTED BY SCPU_NB[i]?   / NO
                      | YES
        +-------------------------+          +----------+
        | SET_CPUID[t] = PROCESSOR ID | S73   |  i=i+1   | S71
        |        OF PROCESSOR         |       +----------+
        | REPRESENTED BY SCPU_NB[i]   |
        +-------------------------+
                      |
        +-------------------------+  S74    < i > NUMBER OF SUBPROCESSORS \  S72
        |   UPDATE TEMP_STAT[k]   |         <      EXCEPT SUSPENDED        /
        +-------------------------+         <       SUBPROCESSORS?        / NO
                      |                              | YES
        +-------------------------+
        |         t=t+1           | S75
        +-------------------------+
                      |
    NO  < t > NUMBER j OF      \  S76         +-------------------------+  S78
    <   SUBPROCESSORS NEEDED?  /              |  CLEAR FLAG TO INDICATE  |
                      | YES                   |  FAILURE OF ASSIGNMENT   |
        +-------------------------+  S77       +-------------------------+
        | SET FLAG TO INDICATE SUCCESS |
        |       OF ASSIGNMENT          |
        +-------------------------+
                      |
                ( RETURN )
```

# FIG. 18

42    43-1    43-2    43-3

EP 1 630 672 A2

# FIG. 19

EP 1 630 672 A2

FIG. 20

EP 1 630 672 A2